# EUROPÄISCHE PATENTANMELDUNG

(11) **EP 4 053 983 A1**
(43) Veröffentlichungstag der Anmeldung: **07.09.2022**
(21) Anmeldenummer: 22161869.7
(22) Anmeldetag: 05.04.2019
(51) Int. Cl.: H01M 50/271, H01M 50/213, H01M 50/296, H01M 50/503

(54) **KONTAKTIERVORRICHTUNG FÜR EIN BATTERIEZELLENMAKROMODULGEHÄUSE UND GEHÄUSEDECKEL FÜR EINE KONTAKTIERVORRICHTUNG FÜR EIN BATTERIEZELLENMAKROMODULGEHÄUSE**

(62) Teilanmeldung aus: 19723308.3
(71) Anmelder: SCIO Technology GmbH, 63741 Aschaffenburg (DE)
(72) Erfinder: WEIS, Alexander, 63768 Hösbach (DE)
(74) Vertreter: Angerhausen, Christoph

(57) **Zusammenfassung**

Offenbart wird eine Kontaktiervorrichtung (41) für ein Batteriezellenmakromodulgehäuse (1), welche zur Spannungsversorgung der in dem Gehäuse aufnehmbaren Batteriezellen (2) ausgebildet ist, mit einem Leistungsverbinder (42), welcher eine elektrische Leitung zwischen Gehäuseinnenraum (3) und Gehäuseaußenseite bereitstellt, und mit einer mit dem Leistungsverbinder (42) elektrisch und mechanisch verbundenen Steckhülse (43) sowie mit einem in die Steckhülse (43) lösbar einsteckbaren Leistungsstecker (44), wobei die Steckhülse (43) mehrere Stecköffnungen (50) aufweist, die ein jeweiliges Einstecken des Leistungssteckers (44) aus mehreren unterschiedlichen Richtungen parallel zur stirnseitigen Wandebene ermöglichen.

Weiterhin offenbart wird ein Gehäusedeckel (61) für die Kontaktiervorrichtung (41) zum stirnseitigen Befestigen am Gehäuse (1), welcher zum Bedecken einer oder mehrerer der stirnseitigen Wände (6) an der Gehäuseschale (4) befestigbar ist, wobei der Gehäusedeckel (61) eine mit der stirnseitigen Wand (6) des Gehäuses in Anlage bringbare Deckelplatte (62) mit einer Durchgangsöffnung (63) mit einem mit den Steckhülsenabmessungen korrespondierenden Außendurchmesser aufweist, so dass die Steckhülse bei angebrachtem Gehäusedeckel (61) durch die Durchgangsöffnung (63) hindurchragt.

## Beschreibung

Die vorliegende Erfindung betrifft ein Batteriezellenmakromodulgehäuse zum Aufnehmen einer Mehrzahl zylindrischer Batteriezellen in einem Innenraum des Batteriezellenmakromodulgehäuses insbesondere für den Einsatz in elektrisch betriebenen Fahrzeugen, beispielsweise Elektroroller, Elektroautos, Elektro-Lkw, Elektro-Nutzfahrzeuge, Elektrobooten oder dergleichen, oder auch für Storage-Systeme. Ferner betrifft die Erfindung eine Kontaktiervorrichtung für ein Batteriezellenmakromodulgehäuse, einen Gehäusedeckel für eine Kontaktiervorrichtung für ein Batteriezellenmakromodulgehäuse sowie ein Batteriezellenmakromodul. Das Batteriezellenmakromodulgehäuse weist eine Gehäuseschale auf welche zwei längsseitige Wände und zwei stirnseitige Wände umfasst, wobei die längsseitigen Wände senkrecht zu den stirnseitigen Wänden angeordnet sind und sich die längsseitigen Wände und die stirnseitigen Wände jeweils parallel voneinander beabstandet gegenüberliegen, sodass die Wände den Innenraum ringförmig umschließen. Die Gehäuseschale weist ferner eine Mehrzahl an Positioniereinbuchtungen auf, welche auf den Innenseiten der Wände jeweils zum Positionieren einer Batteriezelle senkrecht zu der von den Wänden umschlossenen Durchtrittsebene ausgebildet sind.

Ein Problem von Batteriezellenmodulen besteht darin, dass sich die Module im Betrieb, insbesondere bei hoher Belastung, stark aufheizen und sich infolgedessen ausdehnen. Diese temperaturabhängigen Volumenänderungen, insbesondere bezogen auf den Außenumfang der Batteriezellen, haben zur Folge, dass die einzelnen Batteriezellen nicht unmittelbar aneinander anliegend nebeneinander angeordnet werden können. Aufgrund des entstehenden Drucks besteht das Risiko, dass die Batteriezellen, beziehungsweise die die Batteriezellen umgebende Infrastruktur, oder das gesamte Batteriezellenmodul zerstört werden. Daher ist es notwendig, dass bei der Fertigung von Batteriezellenmodulen zwischen den Batteriezellen ein vorbestimmter Abstand eingehalten wird, welcher sich an der erwarteten thermischen Ausdehnung der einzelnen Batteriezellen orientiert. Gleichzeitig ist es aufgrund von Leistungsanforderungen beziehungsweise von einem steigenden Bedarf an Energiespeicherkapazität einerseits und einem nur limitiert zur Verfügung stehenden Platzangebot in elektrisch betriebenen Fahrzeugen notwendig, so viele Zellen wie möglich auf engem Raum unterzubringen. Ferner ist ein stetiges Ziel von Weiterentwicklungen im Fahrzeugbereich, Material und Gewicht einzusparen, um Kosten zu sparen und die Energieeffizienz zu steigern.

Nachteilig ist dabei, dass sowohl für die Herstellung der Batteriemodule, insbesondere für die Positionierung der Batteriezellen, als auch zum räumlichen Trennen der Batteriezellen voneinander, zusätzliche Elemente zur Separierung der Batteriezellen voneinander notwendig sind, welche die Module unnötig aufwendig machen und zu erhöhten Herstellungskosten führen und sich gleichzeitig negativ auf die mögliche Packungsdichte der Batteriezellen auswirken.

Der vorliegenden Erfindung liegt daher die Aufgabe zugrunde, die Nachteile des Standes der Technik zu überwinden, insbesondere ein Batteriezellenmakromodulgehäuse für den Einsatz in einem elektrisch betriebenen Fahrzeug dahingehend zu verbessern, dass dieses bei einer besonders kompakten und materialsparenden Bauweise Spannungen aufgrund thermischer Ausdehnungen vermeiden kann.

Erfindungsgemäß wird diese Aufgabe mit den Merkmalen der unabhängigen Ansprüche gelöst.

Weitere vorteilhafte Ausgestaltungen sind in den Unteransprüchen angegeben.

Danach ist erfindungsgemäß vorgesehen, ein Batteriezellenmakromodulgehäuse zum Aufnehmen einer Mehrzahl zylindrischer Batteriezellen in einem Innenraum des Batteriezellenmakromodulgehäuses bereitzustellen, welches eine Gehäuseschale aufweist, welche zwei längsseitige Wände und zwei stirnseitige Wände umfasst, wobei die längsseitigen Wände senkrecht zu den stirnseitigen Wänden angeordnet sind und sich die längsseitigen Wände und die stirnseitigen Wände jeweils parallel voneinander beabstandet gegenüberliegen, sodass die Wände den Innenraum ringförmig umschließen. Die Gehäuseschale kann vorzugsweise eine Höhe aufweisen, die im Wesentlichen der Höhe der aufzunehmenden Batteriezellen entspricht.

Dabei können die Innenseiten der Wände jeweils eine Mehrzahl Positioniereinbuchtungen aufweisen, die jeweils zum Positionieren einer Batteriezelle senkrecht zu der von den Wänden umschlossenen Durchtrittsebene ausgebildet sind, wobei die Innenseiten der Wände jeweils zwischen benachbarten Positioniereinbuchtungen angeordnete Trennelemente aufweisen können, welche in den Innenraum hineinragen, wobei die längsseitigen Wände länger sein können als die stirnseitigen Wände und wobei die Positioniereinbuchtungen in den stirnseitigen Wänden einen größeren Abstand zueinander aufweisen können als die Positioniereinbuchtungen in den längsseitigen Wänden. Die Trennelemente können insbesondere Rippen sein, die sich von der Gehäuseoberseite hin zur Gehäuseunterseite oder umgekehrt senkrecht zur Durchtrittsebene entlang der Wände zumindest abschnittsweise erstrecken. Die Trennelemente erstrecken sich dabei insbesondere zwischen den angrenzenden Profilen der Positioniereinbuchtungen und weisen gehäuseinnenraumseitig eine Dicke auf, welche den Abstand benachbarter Positioniereinbuchtungen bestimmt. Insbesondere können die Trennelemente gleich weit in den Innenraum hineinragen wie die Außenseiten der Positioniereinbuchtungen. Vorzugsweise ragen die Trennelemente an den stirnseitigen Wänden weiter in den Innenraum als an den längsseitigen Wänden. Die Trennelemente können jedoch auch längsseitig und stirnseitig gleich weit in den Innenraum hineinragen. Die Positioniereinbuchtungen in den längsseitigen Wänden weisen vorzugsweise alle die gleiche Tiefe auf. Die Positioniereinbuchtungen in den stirnseitigen Wänden weisen vorzugsweise ebenfalls die gleiche Tiefe auf. Die Tiefe der Positioniereinbuchtungen der stirnseitigen Wände und die der längsseitigen Wände kann sich unterscheiden, vorzugsweise ist die Tiefe der stirnseitigen Positioniereinbuchtungen größer als die der längsseitigen.

Es kann vorgesehen sein, dass die längsseitigen Wände jeweils dieselbe geradzahlige Anzahl an Positioniereinbuchtungen aufweisen und die stirnseitigen Wände jeweils eine um den Wert eins abweichende Anzahl an Positioniereinbuchtungen aufweisen. Die geradzahlige Anzahl an Positioniereinbuchtungen in den längsseitgen Wänden ergibt sich daraus, dass die in das Gehäuse einzusetztenden Mikromodule in Längsrichtung jeweils aus einem Batteriezellenpaar gebildet sind, welches jeweils aus zwei nebeneinanderliegenden Batteriezellen besteht. Die Differenz von einer Positioniereinbuchtung zwischen beiden stirnseitigen Wänden resultiert daraus, dass eine ungerade Batteriezellenanzahl in stirnseitiger Richtung, sprich eine ungerade Anzahl an Batteriezellenpaaren, besonders gut herstellbar ist. Entlang der längsseitigen Wände können Batteriezellen jeweils nur an den Positioniereinbuchtungen mit der Gehäuseschale in Berührkontakt stehen. Entlang der stirnseitigen Wände können Batteriezellen sowohl mit den Positioniereinbuchtungen als auch mit den zwischen den Positioniereinbuchtungen befindlichen Trennelementen mit der Gehäuseschale in Berührkontakt stehen. Dies folgt insbesondere aus der speziellen Anordnung der Batteriezellen, die durch die Geometrie der Gehäuseschale vorgegeben ist. Dabei bestehen die in der Gehäuseschale aufnehmbaren Mikromodule jeweils aus einer Mehrzahl an Batteriezellenpaaren, die sich in stirnseitiger Richtung versetzt zueinander in zickzackförmigem Verlauf erstrecken. Durch diese Anordnung wird erreicht, dass die Längsachsen aller unmittelbar benachbarten zylindrischen Batteriezellen, die alle denselben Zelldurchmesser aufweisen, jeweils denselben Abstand aufweisen. Benachbarte Batteriezellen bilden dadurch jeweils die Außenkanten gleichseitiger Dreiecke. Aus dem Versatz der Batteriezellenpaare zueinander folgt, dass die außen liegenden Batteriezellen der der stirnseitigen Gehäusewand näheren Batteriezellenpaare der stirnseitig an der Gehäusewand anliegenden Mikromodule jeweils in einer Positioniereinbuchtung aufgenommen sind. Demgegenüber liegen die außen liegenden Batteriezellen der der stirnseitigen Gehäusewand weiter entfernten Batteriezellenpaare der stirnseitig an der Gehäusewand anliegenden Mikromodule jeweils an einem Trennelement zwischen zwei Positioniereinbuchtungen an.

Ferner kann eine der stirnseitigen Wände bevorzugt zumindest drei Positioniereinbuchtungen aufweisen und die andere stirnseitige Wand zumindest vier, besonders bevorzugt fünf beziehungsweise sechs Positioniereinbuchtungen. Bei drei oder mehr an einer Wand anliegenden Batteriezellen folgt für das Batteriezellenmodul die Konsequenz, dass nicht alle Batteriezellen wandseitig anliegen und über eine Positioniereinbuchtung oder ein Trennelement positioniert oder zumindest teilfixiert werden können, sondern zusätzlich im von den Gehäusewänden umschlossenen Innenraum Batteriezellen aufgenommen sind, die jeweils nur von weiteren angrenzenden Batteriezellen umgeben sind und dementsprechend von diesen abgestützt werden müssen, um den einzuhaltenden Abstand zwischen den Batteriezellenaußenseiten zu realisieren. Beim vorliegenden Batteriezellenmodul kann bedingt durch die Ausbildung der Mikromodule durch Batteriezellenpaare die Gesamtanzahl der Batteriezellen nur eine geradzahlige Anzahl sein.

Insbesondere kann der Abstand der Positioniereinbuchtungen in den stirnseitigen Wänden um den Faktor 2/√3 größer sein als der Abstand der Positioniereinbuchtungen in den längsseitigen Wänden. Die Positioniereinbuchtungen in den längsseitigen Wänden können jeweils einen Abstand zueinander aufweisen, welcher größer ist als die Außendurchmesser der Batteriezellen. Dieser Abstand ist insbesondere der Batteriezellendurchmesser plus einen Sicherheitswert, in welchem ein Ausdehnen der Zellen im Betrieb durch Temperatureinwirkung sowie ein Ausdehnen der Zellen über ihre Betriebsdauer berücksichtigt ist, außerdem ein Toleranzbeiwert. Dadurch, dass alle im Modul aufgenommenen Batteriezellen denselben Abstand zu benachbarten Zellen aufweisen und somit die Zelllängsachsen jeweils Außenkanten gleichseitiger Dreiecke bilden, folgt für den Abstand der Positioniereinbuchtungen an den stirnseitigen Wänden, dass dieser dem Abstand zweier Batteriezellenpaare entspricht, zwischen welchen ein dazu versetztes Batteriezellenpaar angeordnet ist, welches demzufolge nicht an einer Positioniereinbuchtung, sondern an dem dazwischen befindlichen Trennelement anliegt. Der Abstand zweier benachbarter Batteriezellen in stirnseitiger Richtung entspricht dem Abstand zweier Batteriezellen in längsseitiger Richtung geteilt durch √3. Somit entspricht der Abstand zweier stirnseitiger Positioniereinbuchtungen dem Abstand zweier Batteriezellen in längsseitiger Richtung multipliziert mit 2/√3.

Außerdem können die Positioniereinbuchtungen Halbschalen mit einem Krümmungsradius aufweisen, der dem Krümmungsradius der zylindrischen Batteriezellen entspricht, wobei der Abstand zwischen den längsseitigen Halbschalen größer als der zweifache Krümmungsradius ist.

Ferner kann das Gehäuse an der Ober- und/oder der Unterseite der Gehäuseschale mit einem Deckel verschlossen sein, der jeweils zwei übereinanderliegende Platten aufweist, von denen eine Außenplatte aus einem Material mit hoher Wärmeleitfähigkeit und von denen eine Innenplatte aus einem elektrisch nichtleitenden Material besteht. Die Platten können aufeinander geklebt oder miteinander verschraubt sein. Die Platten können an das Gehäuse geklebt oder mit diesem verschraubt sein. Hierzu kann die Gehäuseschale gehäuseoberseitig und gehäuseunterseitig jeweils Sacklochbohrungen aufweisen, welche im umlaufenden Rand eingebracht sind. Die äußere Platte dient sowohl der mechanischen Stabilisierung des Moduls und der im Gehäuse aufgenommenen Mikromodule als auch dem effektiven Wärmeabtransport. Die Platte zur Modulinnenseite ist als sogenannter Gapfiller ausgeführt, welcher aus einem elektrisch nichtleitenden Material besteht. Dadurch wird sichergestellt, dass die Modulaußenseite elektrisch vom Modulinnenraum abgeschirmt ist. Vorzugsweise weist auch die Innenplatte eine hohe Wärmeleitfähigkeit auf, um effektiv Wärme aus dem Modulinnenraum nach außen abzuleiten.

Dabei kann zumindest eine der Platten jeweils eine Mehrzahl vorgeprägter Sollbruchflächen aufweisen, die jeweils im Wesentlichen fluchtend mit den Längsachsen mit den im Gehäuse aufnehmbaren Batteriezellen angeordnet sind, so dass im Falle einer Ausgasung einer oder mehrerer der Batteriezellen austretende Heißgase die jeweiligen darüber liegenden Sollbruchflächen aus den Platten herausschlagen können. Die Sollbruchflächen können der Batteriezellform entsprechend insbesondere kreisförmig ausgebildet sein. Die Vorprägung kann vorsehen, dass die Sollbruchflächen Bereiche mit verringerter Materialstärke sind. Alternativ kann die Vorprägung vorsehen, dass die Sollbruchflächen jeweils von Perforationsnähten umschlossen sind.

Insbesondere können die Durchmesser der Sollbruchflächen kleiner sein als die Außendurchmesser der Batteriezellen. Wichtig ist, dass der Durchmesser der Ausgasschlote kleiner ist, als der Außendurchmesser der Zellen, aber größer als die Ausgaskappe der Zelle, damit ein Aufklappen der Zelle und das Ausströmen der heißen Gase begünstigt wird.

Darüber hinaus kann eine der längsseitigen Wände in Längsrichtung an der Gehäuseober- oder -unterseite eine Längsnut zur Aufnahme einer Platine aufweisen, wobei sich ausgehend von der Längsnut mehrere voneinander beabstandete Durchgangsöffnungen parallel zu den Positioniereinbuchtungen jeweils fluchtend mit einem der innenseitigen Trennelemente durch die längsseitige Wand erstrecken. Die Längsnut ist vorzugsweise jeweils zur Gehäuseoberseite oder -unterseite offen, damit eine Platine aus entsprechender Richtung, also senkrecht zur Durchtrittsebene, in die Nut eingeschoben werden kann. Die Längsnut kann sich vorzugsweise fast durch die gesamte Längswand erstrecken und sich zumindest zwischen den außenliegenden Trennelementen erstrecken. Die Längsnut weist vorzugsweise eine Höhe zwischen einem Viertel und einem Drittel der Gehäuseschalenhöhe auf. Die Durchgangsöffnungen können sich durch die gesamte Gehäuseschale erstrecken. Die Anzahl der Durchgangsöffnungen in der entsprechenden Längswand kann vorzugsweise sieben betragen. Es kann insbesondere vorgesehen sein, dass auf Höhe jedes vierten Trennelements eine Durchgangsöffnung angeordnet ist. Vorzugsweise erfolgt ein Abgriff an jedem zweiten Batteriezellenpaar. Vorzugsweise weisen die äußersten Batteriezellenpaare jeweils einen Zwischenabgriff auf.

Dabei kann die Längsnut in eine der stirnseitigen Wände münden und im Mündungsbereich eine Ausnehmung zur Aufnahme eine Platinenanschlussbuchse aufweisen. Die Ausnehmung kann insbesondere quaderförmig sein und eine ausreichende Größe zur Aufnahme einer 12-poligen Platinenanschlussbuchse aufweisen. Die Ausnehmung ist vorzugsweise wie die Längsnut zur Gehäuseoberseite oder -unterseite offen, damit die Platine samt Anschlussbuchse in die Längsnut und die Ausnehmung eingeschoben werden kann.

Die Trennelemente, denen eine der Durchgangsöffnungen fluchtend zugeordnet ist, können außerdem jeweils gehäuseober- und -unterseitig senkrecht zur längsseitigen Wandebene verlaufende Nuten aufweisen, wobei jeweils eine erste der Nuten in die Längsnut und jeweils eine zweite der Nuten in die zugeordnete Durchgangsöffnung mündet. Die Nuten sind jeweils zur Gehäuseoberseite beziehungsweise -unterseite offen. Die Breite der Nuten hängt von der Breite der Trennelemente ab, die Nuten sind dabei nicht breiter als das in den Innenraum ragende Endstück der Trennelemente. Die Nuten weisen jeweils eine derartige Tiefe auf, dass ein durch die Nut geführter Zwischenabgriff so auf ein Kontaktblech trifft, dass dieser darauf fixiert werden kann.

Das Batteriezellenmakromodulgehäuse kann ferner eine Platine umfassen, die in der Längsnut angeordnet ist und eine Mehrzahl von jeweils durch die Durchgangsöffnungen reichende, mit der Platine elektrisch verbundene Arme aufweist. Die Platine weist vorzugsweise einen den Abmessungen der Längsnut entsprechenden Platinenkörper auf, der sich dementsprechend hauptsächlich in Richtung der Längsnut erstreckt. Die Arme erstrecken sich vorzugsweise in regelmäßigen Abständen senkrecht zur Haupterstreckungsrichtung vom Platinenkörper weg. Dabei kann die Platine ferner gehäuseoberseitig und die Arme gehäuseunterseitig abgekantete Zwischenabgriffe aufweisen, welche sich durch senkrecht zur längsseitigen Wandebene verlaufenden Nuten erstrecken und jeweils mit elektrischen Verbindungselementen zwischen zwei an die Nuten angrenzenden Batteriezellen in Berührkontakt stehen.

Insbesondere können die Zwischenabgriffe auf den elektrischen Verbindungselementen angeschweißt oder angelötet sein. Die elektrischen Verbindungselemente können insbesondere Kontaktbleche sein, welche jeweils die beiden Batteriezellen eines Batteriezellenpaars verbinden. Die Kontaktbleche verbinden jeweils die Minuspole und jeweils die Pluspole beider Batteriezellen und sind vorzugsweise zentriert auf den Zellen an diesen befestigt. Die Zwischenabgriffe erfolgen vorzugsweise mittig zwischen den Batteriezellen auf dem jeweiligen Kontaktblech.

Zur Überwachung der Batteriezellmodulparameter können die Zwischenabgriffe jeweils zumindest einen Sensor zum Erfassen von Temperaturwerten und Zellspannungen aufweisen. Die Zwischenabgriffe können aus Blechabschnitten gebildet sein.

Außerdem kann die Platine eine an der Platine befestigte Anschlussbuchse aufweisen, die in der stirnseitigen Ausnehmung aufgenommen ist. Die Anschlussbuchse ist dabei entsprechend an einem Außenbereich des Platinenkörpers so befestigt, dass der Buchsenkörper in Haupterstreckungsrichtung der Platine über das Platinenende hinausragt.

Eine der stirnseitigen Wände kann außenseitig an der Gehäuseoberseite und die andere der stirnseitigen Wände kann außenseitig an der Gehäuseunterseite jeweils einen eine Stufe ausbildenden Rücksprung aufweisen. Dadurch weisen beide Stirnseiten der Gehäuseschale einen um 180 Grad verdreht zueinander angeordneten Rücksprung auf. Alle weiteren stirnseitig angeordneten Gehäuseelemente können darüber hinaus entsprechend ebenfalls um 180 Grad zueinander auf dem jeweiligen Stirnseiten angebracht sein, so wie beispielsweise die Längsnut mitsamt der Ausnehmung. Der Rücksprung zeichnet sich durch eine gegenüber einer ebenen stirnseitigen Wand stufenförmige Wand aus, wenn man den Querschnitt der stirnseitigen Wand betrachtet. Dadurch können die stirnseitigen Wände jeweils eine nahezu über die gesamte Wandbreite verlaufende Kante aufweisen. Die Kante kann sich mit gegenüber der Gehäuseoberseite beziehungsweise der Gehäuseunterseite wechselnder Tiefe durch die jeweilige Wand erstrecken. Der Profilverlauf des Rücksprungs ist in der Draufsicht insbesondere T-förmig. Der Rücksprung kann sich mit einer Stufentiefe von 1mm bis 1cm in die Wanddicke hineinerstrecken.

Dabei kann sich der Rücksprung mit einer von der Gehäuseober- oder -unterseite her gesehen ersten Tiefe über eine erste Breite der stirnseitigen Wand erstrecken, wobei die erste Breite mit der Anzahl an Trennelementen auf der Innenseite der stirnseitigen Wand korrespondiert, wobei der Rücksprung in einem Mittenbereich der Wand einen Abschnitt mit vergrößerter Tiefe aufweisen kann, dessen Breite im Wesentlichen der Abmessung der vergrößerten Tiefe entspricht. Dadurch kann der Rücksprung ein T-förmiges Profil mit zwei seitlichen an der jeweiligen Gehäuseseite entlanglaufenden Armen und einem mittigen, tiefer in die Gehäusehöhe hineinragenden Mittenbereich aufweisen, wobei das Profil zur jeweiligen Gehäuseseite, je nachdem, welcher Seite die Arme zugewandt sind, offen ist. Der Mittenbereich kann insbesondere quadratisch sein und eine Breite von 0,5 bis 5 cm aufweisen, wobei die Differenz zwischen der vergrößerten Tiefe und der ersten Tiefe der Breite des Mittenbereichs entsprechen kann. Der Rücksprung kann an den Außenseiten der Arme des T-Profils zur jeweiligen Gehäuseseite hin auslaufen.

Dabei können die an den Rücksprung angrenzenden Trennelemente jeweils zur Gehäuseoberseite beziehungsweise zur Gehäuseunterseite offene Aussparungen aufweisen, welche jeweils senkrecht zu den stirnseitigen Wandebenen verlaufen. Die Aussparungen können dabei maximal eine Breite aufweisen, die der der zugehörigen Trennelemente entspricht. Die Aussparungen können sich insbesondere durch die gesamte Wandstärke, das heißt, zwischen Gehäuseinnenraum und Gehäuseaußenseite erstrecken.

Ferner können die Aussparungen im Querschnitt durch die stirnseitigen Wände einen rechteckigen Verlauf aufweisen, so dass sich in der Draufsicht auf die jeweilige Wand jeweils eine Zinnenstruktur ergibt.

Insbesondere kann an den Außenseiten der stirnseitigen Wände jeweils eine Mehrzahl an Rastelementen angeordnet sein. Dabei kann jedes Rastelement aus zwei Rasthaken bestehen, welche jeweils einen sich von der stirnseitigen Wand wegerstreckenden Distanzabschnitt sowie einen parallel zur stirnseitigen Wand verlaufenden Rastabschnitt aufweisen, wobei sich der Rastabschnitt am von der Wand entfernten Ende des Distanzabschnitts vom Distanzabschnitt wegerstreckt. Die Rasthaken können parallel nebeneinander angeordnet sein. Die Rastabschnitte können insbesondere voneinander wegweisen. Die Rastelemente können insbesondere symmetrisch auf der jeweiligen stirnseitigen Wand angeordnet sein. Insbesondere können jeweils mehrere Rastelemente untereinander angeordnet sein. Vorzugsweise kann jede stirnseitige Wand vier Rastelemente aufweisen.

Die Erfindung betrifft außerdem eine Kontaktiervorrichtung für ein wie oben beschriebenes Batteriezellenmakromodulgehäuse, welche zur Spannungsversorgung der in dem Gehäuse aufnehmbaren Batteriezellen ausgebildet sein kann, mit einem Leistungsverbinder, welcher eine elektrische Leitung zwischen Gehäuseinnenraum und Gehäuseaußenseite bereitstellt, und mit einer mit dem Leistungsverbinder elektrisch und mechanisch verbundenen Steckhülse sowie mit einem in die Steckhülse lösbar einsteckbaren Leistungsstecker. Die Kontaktiervorrichtungen können an den stirnseitigen Wänden an der Gehäuseschale fixiert sein. Insbesondere kann die Kontaktiervorrichtung in den Rücksprung eingesetzt und über ein Verbindungselement an ein in der Gehäuseschale aufgenommenes Mikromodul fixiert sein. Die Steckhülse kann mit dem Leistungsverbinder verschweißt, verlötet oder einstückig mit diesem ausgebildet sein. Die Kontaktiervorrichtung kann insbesondere zumindest teilweise ein vormontiertes Teil sein, bei dem der Leistungsverbinder und die Steckhülse in bereits verbundenem Zustand bereitgestellt sind.

Dabei kann der Leistungsverbinder eine parallel zu der stirnseitigen Wand ausgerichtete Kontaktschiene aufweisen, die eine Breite aufweist, welche mit der Anzahl an Trennelementen auf der Innenseite der zugeordneten stirnseitigen Wand korrespondiert. Dabei kann sich eine Kontaktlasche an die Kontaktschiene anschließen. Außerdem können sich von der Kontaktschiene rechtwinklig abgekantete Kontaktfinger in Richtung Gehäuseinnenraum wegerstrecken. Die Breite der Kontaktschiene entspricht im Wesentlichen der ersten Breite des Rücksprungs, also der des oberen Balkens des T-förmigen Profils. Da durch jede Aussparung jedes der Trennelemente zur Anbindung an das mit dem an der stirnseitigen Wand anliegenden Mikromodul in Kontakt stehende Verbindungselement ein Kontaktfinger in Richtung Gehäuseinnenraum geführt ist, korreliert die Breite der Kontaktschiene mit der Anzahl an Trennelementen beziehungsweise mit der Anzahl an an der stirnseitigen Wand anliegenden Batteriezellen. Die Kontaktschiene kann einen auf voller Kontaktschienenbreite abgekanteten Kantabschnitt aufweisen, von welchem sich jeweils die Kontaktfinger in regelmäßigen Abständen wegerstrecken. Die Kontaktfinger können auch unmittelbar von der Kontaktschiene abgekantet sein. Die Kontaktlasche kann sich insbesondere mittig von der Kontaktschiene wegerstrecken, wobei die Kontaktlasche eine geringere Breite aufweist als die Kontaktschiene. Die Kontaktschiene kann in der gleichen Ebene liegen wie die Kontaktschiene. Die Kontaktlasche kann eine quadratische oder eine rechteckige Fläche aufweisen. Die Kontaktlasche kann Abmessungen aufweisen, die im Wesentlichen denen des Bereichs vergrößerter Tiefe des Rücksprungs entsprechen. Somit können zumindest die Kontaktschiene sowie die Kontaktlasche vollständig in dem Rücksprung aufgenommen sein. Die rechteckige Fläche kann mit der Rückseite der Steckhülse elektrisch leitend und mechanisch verbunden werden.

Insbesondere kann der Leistungsverbinder im Rücksprung eingesetzt sein, wobei die Kontaktschiene im Bereich der ersten Breite eingesetzt ist, wobei die Kontaktlasche in den Abschnitt mit vergrößerter Tiefe hineinragt, und wobei sich die Kontaktfinger durch die Aussparungen in den Gehäuseinnenraum hineinerstrecken.

Ferner kann der Leistungsverbinder eine Schmelzsicherung aufweisen, welche zwischen der Kontaktlasche und der Kontaktschiene angeordnet ist und aus einer vordefinierten Anzahl an Stegen mit einer jeweils vordefinierten Breite gebildet ist. Die Schmelzsicherung kann im Verbindungsbereich zwischen Kontaktschiene und Kontaktlasche insbesondere am oberen Ende der Kontaktlasche angeordnet sein. Die Schmelzsicherung kann sich über die gesamte Breite der Kontaktlasche erstrecken. Die Schmelzsicherung kann insbesondere aus mehreren Stegen und mehreren Freiräumen zwischen den Stegen gebildet sein. Der Überlaststrom kann insbesondere durch die Anzahl an Stegen, die Stegbreite, die Breite der Kontaktlasche oder die Dicke des Blechs des Leistungsverbinders eingestellt werden. Die Schmelzsicherung kann insbesondere oberhalb der an den Leistungsverbinder angebundenen Steckhülse angeordnet sein, damit die Schmelzsicherung von außen her sichtbar bleibt. Die Stege der Schmelzsicherung können insbesondere senkrecht, also im rechten Winkel zur Kontaktschiene verlaufen.

Die Steckhülse kann mehrere Stecköffnungen aufweisen, die ein jeweiliges Einstecken des Leistungssteckers aus mehreren unterschiedlichen Richtungen parallel zur stirnseitigen Wandebene ermöglichen. Die Steckhülse kann aus einem flachen Rohrabschnitt gebildet sein, bei dem zwei parallele Wandabschnitte mittels gegenüber den parallelen Wandabschnitten kürzeren Verbindungsabschnitten verbunden sind. Die Verbindungsabschnitte können senkrecht zu den parallelen Wandabschnitten verlaufen. Die Verbindungsabschnitte können aber auch bogenförmig verlaufen. Die Stecköffnungen können insbesondere parallel zu den parallelen Wandabschnitten verlaufen. Die Stecköffnungen können alle denselben Öffnungsquerschnitt aufweisen. Dazu kann die Steckhülse in Rohrlängsrichtung eine größere Abmessung aufweisen als in Rohrquerrichtung.

Insbesondere kann die Steckhülse vier Öffnungen aufweisen, welche jeweils rechtwinklig zueinander angeordnet sind.

Außerdem kann die Steckhülse einen von der stirnseitigen Gehäusewand beabstandeten Hülsendurchbruch aufweisen, in den der Leistungsstecker federnd einrasten kann. Der Hülsendurchbruch kann in einer der parallelen Wände angeordnet sein. Der Hülsendurchbruch kann einen quadratischen Querschnitt aufweisen. Der quadratische Querschnitt kann abgerundete Ecken aufweisen.

Darüber hinaus kann der lösbare Leistungsstecker ein Steckerelement mit zwei parallel zueinander verlaufenden Steckplatten umfassen, die relativ zueinander federnd beweglich sind und über einen Halteabschnitt miteinander verbunden sind. Dabei kann eine der Steckplatten einen Clipdurchbruch aufweisen, durch welchen ein Clipabschnitt eines zwischen den Steckplatten aufgenommenen Clips ragt, wobei der Clip eine umlaufende Kante aufweist, welche den Clipdurchbruch hintergreift, so dass ein Herausrutschen des Clips durch den Clipdurchbruch verhindert ist. Der Abstand der Steckplatten im nicht gespannten Zustand kann geringer sein als die Dicke des Clips, damit ein Herausfallen des Clips verhindert wird.

Insbesondere können die Abmessungen von Hülsendurchbruch und Clipabschnitt so aufeinander abgestimmt sein, dass bei in die Steckhülse eingestecktem Leistungsstecker der Clip in den Hülsendurchbruch einrastet.

Außerdem kann die durch den Hülsendurchbruch ragende Oberseite des Clips eine farbliche Markierung aufweisen. Dadurch kann im Betrieb des Batteriezellenmakromoduls von der Außenseite her erkannt werden, ob der Leistungsstecker korrekt in die Steckhülse eingesteckt ist und damit überprüft werden, ob das Batteriezellenmakromodul kontaktiert ist.

Die Kontaktiervorrichtung kann mit den Kontaktfingern des Leistungsverbinders mechanisch und elektrisch an im Gehäuse aufgenommene Batteriezellen koppelbar sein, wobei die Steckhülse mechanisch und elektrisch an die Kontaktlasche gekoppelt sein kann. Die Kontaktfinger können insbesondere durch die auf der Gehäuseschale ausgebildete Zinnenstruktur ragen, welche durch die Aussparungen und die Positioniereinbuchtungen gebildet ist. Die Kontaktfinger können dabei insbesondere mit einem auf die Leistungsverbinderanbindung angepassten Kontaktverbinder gekoppelt sein, der jeweils in den stirnseitigen Randbereichen des Batteriezellenmoduls zur Kopplung an die Kontaktfinger angeordnet sein kann. Diese Kontaktverbinder kann einen entsprechend dem Batteriezellenversatz verlaufenden zickzackförmigen Mittelsteg aufweisen, welcher sich parallel zu den stirnseitigen Wänden erstreckt. Parallel zu den stirnseitigen Wänden können sich Kontaktelemente wegerstrecken, die jeweils eine Batteriezelle mit einem der Kontaktfinger verbinden. Die Endbereiche der Kontaktelemente sind dabei so ausgebildet, dass sie wandseitig in stirnseitiger Richtung entsprechend dem Kontaktfingerverlauf einen geraden Verlauf aufweisen und batteriezellenseitig einen der Batteriezellenanordnung folgenden zickzackförmigen Verlauf.

Die Erfindung betrifft ferner einen Gehäusedeckel für eine wie oben beschriebene Kontaktiervorrichtung zum stirnseitigen Befestigen am Gehäuse, welcher zum Bedecken einer oder mehrerer der stirnseitigen Wände an der Gehäuseschale befestigbar sein kann, wobei der Gehäusedeckel eine mit der stirnseitigen Wand des Gehäuses in Anlage bringbare Deckelplatte mit einer Durchgangsöffnung mit einem mit den Steckhülsenabmessungen korrespondierenden Außendurchmesser aufweisen kann, so dass die Steckhülse bei angebrachtem Gehäusedeckel durch die Durchgangsöffnung hindurchragt. Die Deckelplatte kann Abmessungen aufweisen, die zumindest den Abmessungen der stirnseitigen Wände entsprechen. Der Gehäusedeckel kann insbesondere aus einem nichtleitenden Material hergestellt sein, um den Gehäuseinnenraum elektrisch abzuschirmen.

Ferner kann der Gehäusedeckel eine von der Deckelplatte beabstandete Dachstruktur umfassen, welche die Steckhülse außenseitig abdeckt und mit den Öffnungen in der Steckhülse korrespondierende Dachöffnungen aufweist, durch welche der Leistungsstecker in die Steckhülse einsteckbar ist. Die Dachstruktur kann insbesondere parallel zur Deckelplatte verlaufen. Der Abstand zwischen Dachstruktur und Deckelplatte kann dabei so bemessen sein, dass dieser zumindest die Höhe der Steckhülse aufweist. Die Dachstruktur kann so bemessen sein, dass die Steckhülse abgedeckt ist und darüber hinaus an jeder der Dachöffnungen ein ausreichender Abstand zu der unter der Dachstruktur angeordneten Steckhülse verbleibt, damit ein ausreichender Schutz vor den elektrisch leitenden Teilen des Batteriezellenmoduls gewährleistet ist.

Dabei kann die Dachstruktur eine Durchgangsbohrung aufweisen, durch welche bei korrekt eingestecktem Leistungsstecker die farbliche Markierung des Clips sichtbar ist. Die Bohrung kann mittig in der Dachstruktur angeordnet sein. Die Bohrung kann eine Größe aufweisen, die ein Beobachten des darunter liegenden Clips ermöglicht, aber gleichzeitig ein in Kontakt kommen mit diesem verhindert, also maximal eine halbe Fingerdicke. Die Bohrung kann dazu verwendet werden, die eingeclipste Verbindung wieder zu Lösen, indem mit einem spitzen Gegenstand, der durch die Durchgangsbohrung gesteckt wird, der Clip in Richtung stirnseitiger Gehäusewand in die Steckhülse gedrückt wird, so dass der Leistungsstecker herausgezogen werden kann.

In der Deckelplatte kann auch ein Sichtfenster angeordnet sein, welches mit der von der Deckelplatte abgedeckten Schmelzsicherung fluchtet, so dass der Zustand der Schmelzsicherung von der Gehäuseaußenseite her überprüft werden kann. Das Sichtfenster kann aus zumindest einem schlitzförmigen Durchbruch gebildet sein, vorzugsweise mehreren, um die Sichtbarkeit der Schmelzsicherung zu verbessern. Die Schlitze können entsprechend der Dachbohrung Breiten aufweisen, die ein Beobachten der darunter liegenden Schmelzsicherung ermöglichen, aber gleichzeitig ein in Kontakt kommen mit dieser verhindern. Die schlitzförmigen Durchbrüche können waagerecht in der Deckelplatte eingebracht sein. Die schlitzförmigen Durchbrüche können insbesondere einen Winkelversatz zu den Stegen der darunter liegenden Schmelzsicherung aufweisen, bevorzugt einen Winkelversatz von 90 Grad, damit durch die schlitzförmigen Durchbrüche alle Stege der Sicherung sichtbar sind. Die schlitzförmigen Durchbrüche können dazu insbesondere eine größere Breite als die Schmelzsicherung aufweisen.

Die Deckelplatte kann einen Durchbruch aufweisen, der mit der in der stirnseitigen Wand angeordneten Ausnehmung zur Aufnahme einer Platinenanschlussbuchse fluchtet. Der Durchbruch kann dabei insbesondere den Abmessungen der Aufnahme entsprechen oder größer sein als diese.

Der Gehäusedeckel kann ferner Versteifungsrippen aufweisen, welche jeweils auf der Deckelplatte angeordnet sind, jedoch nicht in senkrecht zum Durchbruch verlaufenden Bereichen der Deckelplatte beziehungsweise im Bereich der Einschubachsen des Leistungssteckers verlaufen. Die Versteifungsrippen sind ebenfalls nicht in den Bewegungsachsen der Einsteckrichtungen des Leistungssteckers angeordnet. Dementsprechend weist die Deckelplatte in den Achsen der Einstecköffnungen der Dachstruktur keine Versteifungsrippen auf. Die Breite der versteifungsrippenfreien Gebiete ist dabei größer als die Breite des Leistungssteckers. Das Freilassen der senkrecht zum Durchbruch verlaufenden Bereiche der Deckelplatte dient dem Zweck, dass in diesen Bereichen ein Kabel entlanggeführt werden kann, das in die Platinenanschlussbuchse einsteckbar ist. Die Versteifungsrippen können als Tragelemente dienen, die die Dachstruktur auf der Deckelplatte fixieren. Dazu können die Versteifungsrippen insbesondere waagerecht auf der Deckelplatte angeordnet sein. Jeweils eine Versteifungsrippe kann sich waagerecht von jeweils einer Ecke der Dachstruktur wegerstrecken, so dass die Deckelplatte zumindest vier Versteifungsrippen aufweist.

Die Deckelplatte kann einen oder mehrere mit den Rastelementen korrespondierende Rastdurchbrüche aufweisen, wobei bei an der Gehäuseschale fixiertem Gehäusedeckel die Rastelemente durch die Rastdurchbrüche ragen und den Gehäusedeckel mittels der an der Außenseite des Gehäusedeckels anliegenden Rastabschnitte festhalten. Die Rastdurchbrüche können eine größere Breite als die Breite der Rastabschnitte aufweisen, damit die Rastabschnitte durch diese hindurchgreifen können. Zum Lösen der Rastelemente können die voneinander wegweisenden, hinter der Deckelplatte eingerasteten Rastabschnitte zusammengedrückt werden, so dass die Deckelplatte abgenommen werden kann.

Der Gehäusedeckel kann ferner einen abgekanteten Abschnitt aufweisen, der sich an der Seite der Deckelplatte befindet, welcher die schlitzförmigen Durchbrüche zugewandt sind. Der abgekantete Abschnitt erstreckt sich am oberen Ran der Deckelplatte von dieser in Richtung des Gehäuseinnenraums weg und ragt tiefer in diesen hinein als die darunter liegenden Kontaktfinger des Leistungsverbinders. Die Abkantung dient dem Zweck, die Kontaktfinger zur Gehäuseaußenseite hin abzuschirmen, um ein unbeabsichtigtes Berühren dieser zu verhindern. Die Abkantung kann sich fast über die gesamte Deckelbreite erstrecken, wobei in den Eckbereichen der Deckelplatte Freiräume verbleiben können, welche zum Fixieren der Platten an der Gehäuseschale genutzt werden können.

Die Erfindung betrifft ferner ein Batteriezellenmakromodul mit einer Mehrzahl an Batteriezellenmikromodulen, die in einem wie oben beschriebenen Batteriezellenmakromodulgehäuse aufgenommen sein können, wobei jedes Batteriezellenmikromodul aus einer Mehrzahl parallel zueinander ausgerichteter zylindrischer Batteriezellen gebildet sein kann, welche durch jeweils ein an den Oberseiten und an den Unterseiten der Zellen angeschweißtes Verbindungsblech auf einem vordefinierten Abstand zueinander fixiert und elektrisch kontaktiert sind.

Dabei kann jedes Batteriezellenmikromodul eine Mehrzahl von Batteriezellenpaaren mit jeweils zwei parallel nebeneinander angeordneten Batteriezellen umfassen, wobei die Batteriezellenpaare in einer sich parallel zu den stirnseitigen Wänden erstreckenden Reihe zickzackförmig paarweise versetzt zueinander angeordnet sein können, so dass alle unmittelbar benachbarten Batteriezellen eines Batteriezellenmikromoduls im Wesentlichen denselben Abstand zueinander aufweisen.

Insbesondere können die Batteriezellenmikromodule parallel nebeneinander in der Gehäuseschale angeordnet sein und die außen liegenden Batteriezellen jeweils an jeweils einer der Positioniereinbuchtungen der stirnseitigen oder der längsseitigen Wände anliegen. Bevorzugt können die Batteriezellenmikromodule über zumindest ein Fixierungsmittel in der Durchtrittsebene relativ zueinander fixiert sein, so dass der Abstand zwischen allen unmittelbar benachbarten Batteriezellen aneinander grenzender Batteriezellenmikromodule im Wesentlichen dem Batteriezellenabstand der Batteriezellenmikromodule entspricht.

Die Batteriezellenmodule können zur Realisierung einer Reihenschaltung insbesondere alternierend in der Gehäuseschale angeordnet sein, so dass abwechselnd die Pluspolseite und die Minuspolseite der Module nebeneinanderliegen.

Das Fixierungsmittel kann dabei elektrisch leitende Mikromodulverbinder umfassen, die auf den Oberseiten beziehungsweise Unterseiten benachbarter Batteriezellenmikromodule fixiert sind und diese verbindet, so dass diese kontaktiert und in Reihe geschaltet sind.

Das Fixierungsmittel kann ferner elektrisch nichtleitende Mikromodulverbinder umfassen, welche an den Verbindungsblechen fixiert sind, die nicht im Zuge der Reihenschaltung miteinander verbunden sind. Dadurch kann gewährleistet werden, dass jedes in der Gehäuseschale aufgenommene Mikromodul mit jeweils beiden benachbarten Mikromodulen oberseitig und unterseitig mechanisch verbunden ist und dadurch alle Module in der Gehäuseschale einerseits fixiert sind und andererseits auf einem vorbestimmten Abstand zueinander gehalten werden, so dass keine Batteriezellen mit ihren Außenseiten unmittelbar in Berührkontakt stehen.

Die Verbindungsbleche können jeweils Kontaktbleche aufweisen, welche jeweils die Batteriezellen der Batteriezellenpaare mechanisch starr und elektrisch miteinander verbinden. Die Kontaktbleche können dabei endseitig jeweils im Mittenbereich der Batteriezellen an diese angeschweißt sein. Die Verbindungsbleche können ferner jeweils die Kontaktbleche verbindende Kontaktblechverbinder aufweisen, welche der Anordnung der Batteriezellenpaare zueinander entsprechend entlang des Batteriezellenmikromoduls einen zickzackförmigen Verlauf aufweisen können. Die Kontaktbleche und die Kontaktblechverbinder können miteinander zu einem Verbindungsblech verschweißt sein. Die Kontaktbleche und die Kontaktblechverbinder können auch einstückig ein Verbindungsblech ausbilden. Die Kontaktbleche können jeweils endseitig zumindest einen schlitzförmigen Durchbruch aufweisen, der im Wesentlichen jeweils mit den Längsachsen der Batteriezellen fluchtet. Die Kontaktblechverbinder können ebenfalls diese schlitzförmigen Durchbrüche aufweisen, welche jeweils im Wesentlichen mittig zwischen benachbarten Batteriezellenpaaren angeordnet sind. Die schlitzförmigen Durchbrüche können mittig jeweils eine Aufweitung aufweisen, welche das Einstecken von entsprechenden Gegenelementen erleichtern. Die schlitzförmigen Durchbrüche können insbesondere parallel zu den stirnseitigen Wänden der Gehäuseschale angeordnet sein.

Ferner kann das Fixierungsmittel elektrisch leitende Mikromodulverbinder umfassen, die auf den leitenden Oberseiten beziehungsweise Unterseiten benachbarter Batteriezellenmikromodule fixiert sind und diese verbindet, so dass diese kontaktiert und in Reihe geschaltet sind. Die Mikromodulverbinder können eine Mehrzahl an Verbindungsabschnitten aufweisen, welche jeweils an definierten Abschnitten benachbarter Verbindungsbleche von benachbarten Batteriezellenmikromodulen fixiert sind. Die Mikromodulverbinder können ferner einen die Verbindungsabschnitte verbindenden Mittelsteg aufweisen, welcher im Wesentlichen senkrecht zu den Verbindungsabschnitten angeordnet ist. Der Mittelsteg kann einen geraden Verlauf aufweisen, so dass die Endabschnitte der davon abgehenden gleichförmig ausgebildeten Verbindungsabschnitte ebenfalls linear zueinander ausgerichtet sind. Alternativ kann der Mikromodulverbinder durch ein rechteckiges Blech realisiert sein, dessen Außenabmessungen so bemessen sind, dass die Außenkanten des Blechs jeweils auf den Ober- oder Unterseiten benachbarter Batteriezellen befestigbar sind. Der Mittelsteg kann auch einen zickzackförmigen Verlauf aufweisen, welcher dem Versatz benachbarter Batteriezellenpaare folgt, so dass die außenseitigen Endabschnitte der gleichförmigen Verbindungsabschnitte ebenfalls jeweils zickzackförmig in stirnseitiger Richtung verlaufen. Der Mikromodulverbinder kann in diesem Fall auch alternativ als einteiliges zickzackförmiges Blech ausgebildet sein. Sofern der Mikromodulverbinder zickzackförmig verläuft, ist er bevorzugt mit den Verbindungsabschnitten jeweils auf den auf den Ober- oder Unterseiten benachbarter Batteriezellen fixierter Verbindungsblechabschnitte befestigt. Ist der Mikromodulverbinder geradlinig ausgeführt, ist er mit den Verbindungsabschnitten jeweils auf den die Batteriezellenpaare verbindenden Kontaktblechverbindern vorzugsweise mittig fixiert, da die Mittelpunkte der Kontaktblechverbinder auch bei zickzackförmigem Versatz der Batteriezellenpaare zueinander linear zueinander ausgerichtet sind. Alle Mikromodulverbinderformen können sowohl leitend als auch nichtleitend ausgeführt sein.

Die Verbindungsabschnitte können zum Fixieren der Mikromodulverbinder an ihren außenseitigen Endabschnitten jeweils abgekantete Laschen aufweisen, die zum Eingreifen in die schlitzförmigen Nuten der Verbindungsbleche ausgebildet sind. Die abgekanteten Laschen können abgerundete Ecken aufweisen, welche neben den Aufweitungen in den schlitzförmigen Durchbrüchen ein Einstecken in die schlitzförmigen Nuten erleichtern.

Alternativ oder zusätzlich können die Mikromodulverbinder mit den jeweiligen Verbindungsblechen verschweißt werden.

Das Fixierungsmittel kann auch einen Füllkleber umfassen, welcher zwischen den Batteriezellen in der Gehäuseschale eingebracht ist. Dabei kann auf sämtliche nichtleitenden Mikromodulverbinder verzichtet werden, während die leitenden Mikromodulverbinder abwechselnd zwischen den Oberseiten und zwischen den Unterseiten benachbarter Mikromodule verlaufen.

Weitere Eigenschaften, Vorteile und Merkmale der Erfindung sind in der folgenden Beschreibung bevorzugter Ausführungen der Erfindung anhand der beiliegenden Zeichnungen erkennbar, in denen zeigen:
- Figur 1a/b: eine perspektivische Darstellung einer Gehäuseschale sowie eine Draufsicht auf eine stirnseitige Wand der Gehäuseschale;
- Figur 2a/b/c: eine Darstellung eines Zellverbinders für ein Mikromodul sowie jeweils eine obere und eine untere Ansicht eines mittels eines Zellverbinders verbundenen Mikromoduls;
- Figur 3a/b/c/d: perspektivische Darstellungen von Mikromodulverbindern, eine gerade Ausführungsform und eine zickzackförmige Ausführungsform;
- Figur 4a/b/c: eine Draufsicht auf eine Platine mit Platinenanschlussbuchse, Querschnitt durch eine Gehäuseschale im Bereich einer Durchgangsöffnung mit eingesetzter Platine, eine perspektivische Darstellung einer Platine mit abgekanteten Zwischenabnehmern;
- Figur 5a/b/c: ein perspektivische Darstellung eines Leistungsverbinders, eine Frontalansicht sowie eine Draufsicht eines Leistungsverbinders;
- Figur 6a/b: eine Draufsicht auf eine Steckhülse, eine perspektivische Darstellung einer Steckhülse;
- Figur 7a/b/c: eine perspektivische Darstellung eines Leistungssteckers, eine perspektivische Darstellung eines Leistungssteckers mit eingesetztem Kontaktclip, eine perspektivische Darstellung eines Kontaktclips;
- Figur 8a/b/c: eine perspektivische Darstellung eines Gehäusedeckels, eine Frontalansicht sowie eine Rückansicht eines Gehäusedeckels;
- Figur 9a/b: eine perspektivische Teildarstellung eines Batteriezellenmakromoduls ohne aufgesetzten Gehäusedeckel, eine perspektivische Teildarstellung eines Batteriezellenmakromoduls mit aufgesetztem Gehäusedeckel;
- Figur 10a/b: perspektivische Darstellungen der Deckelinnenplatte/ Deckelaußenplatte;
- Figur 11a/b/c: eine perspektivische Darstellung einer Gehäuseschale mit aufgesetztem Deckel mit perforierten Sollbruchflächen, eine Querschnittsansicht eines Batteriezellenmakromoduls im Falle einer Ausgasung, eine perspektivische Ansicht von Batteriezellen im Falle einer Ausgasung;
- Figur 12: eine perspektivische Darstellung eines Batteriezellenmakromoduls ohne Gehäuseschale.

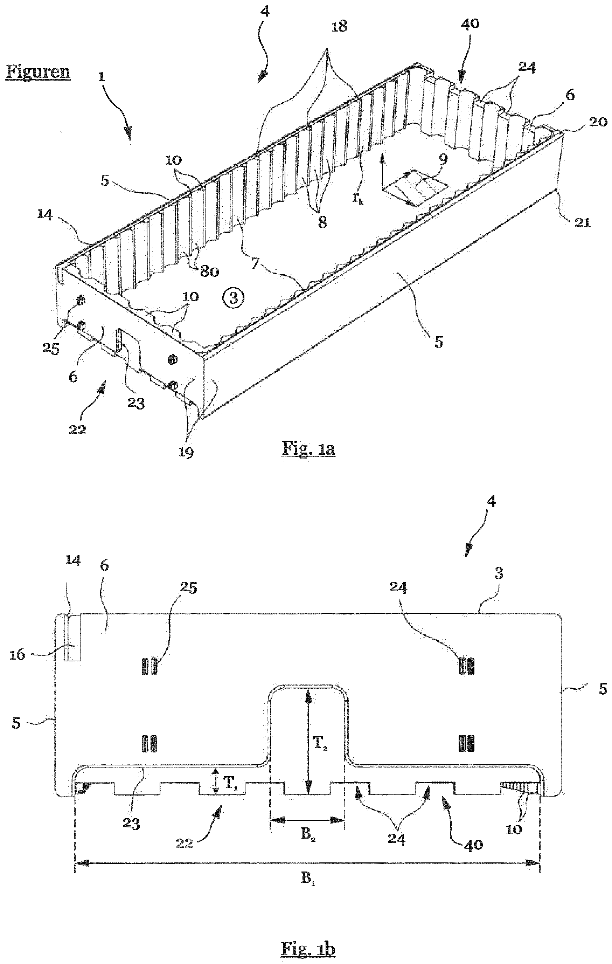

Figur 1 zeigt die Gehäuseschale 4 des Batteriezellenmakromoduls 1 mit jeweils parallel beabstandeten längsseitigen Wänden 5 und stirnseitigen Wänden 6, welche den Innenraum 3 umschließen. An den Innenseiten 7 der Wände sind jeweils Positioniereinbuchtungen 8 angeordnet, die sich senkrecht zur Durchtrittsebene 9 erstrecken und welche als Halbschalen 80 ausgebildet sind und auf den längsseitigen Wänden 5 einerseits und den stirnseitigen Wänden 6 andererseits jeweils in regelmäßigen Abständen angeordnet sind. Die Abstände der Positioniereinbuchtungen 8 auf den stirnseitigen Wänden 6 sind dabei größer als die der Positioniereinbuchtungen 8 auf den längsseitigen Wänden. Die Abstände werden durch rippenförmige Trennelemente 10 realisiert, welche entsprechend auf den stirnseitigen Wänden 6 eine größere Dicke als auf den längsseitigen Wänden aufweisen. Die Halbschalen 80 reichen in der gezeigten Ausführungsform jeweils von der Gehäuseoberseite 20 bis zur Gehäuseunterseite 21. Eine Längsnut 14 erstreckt sich parallel zu den längsseitigen Wänden 5 durch die obere längsseitige Wand 5, welche in Figur 1a dargestellt ist und in die Ausnehmung 16 in der unteren stirnseitigen Wand 6 mündet, wobei die Längsnut 14 sich bis zum letzten Trennelement 10 vor der gegenüberliegenden Wand 6 erstreckt, jedoch nicht in diese gegenüberliegende Wand 6 mündet. Die Längsnut 14 dient zum Einstecken einer Platine 34, welche mittels in regelmäßigen Abständen angeordneten Zwischenabgriffen 38 Zellspannungen und Temperaturwerte der Batteriezellen 2 abgreift, diese verarbeitet und beispielsweise an ein übergeordnetes Batteriemanagementsystem (BMS) weiterleitet. Die Zwischenabgriffe 38 der Platine 34 sind dabei durch Nuten 18 geführt, welche sich senkrecht zu der längsseitigen Wand 5, in welcher die Platine 34 aufgenommen ist, durch die Trennelemente 10 erstrecken. Man sieht, dass an jedem vierten Trennelement 10 eine entsprechende 18 Nut durchgeführt ist. Als Reaktion auf die erfassten Werte kann das Batteriezellenmakromodul 1 mit entsprechenden Befehlen angesteuert werden. Es ist ferner zu erkennen, dass auf der sichtbaren Außenseite 19 der stirnseitigen Wand 6 vier Rastelemente 25 symmetrisch angeordnet sind und an der Gehäuseunterseite 21 ein Rücksprung 22 mit einer stufenförmigen Kante 22 ausgebildet ist, wobei der Rücksprung eine erste Breite B₁ aufweist, mit welcher sich der Rücksprung 22 mit einer Tiefe T₁ ausgehend von der Gehäuseunterseite 21 über die stirnseitige Wand 6 erstreckt. Im mittleren Bereich des Rücksprungs 22 weist dieser über eine Breite von B2 eine gegenüber die erste Tiefe T₁ vergrößerte Tiefe T₂ auf. Auf den an den Rücksprung 22 angrenzenden Trennelementen 10 ist zu erkennen, dass jeweils senkrecht zu der stirnseitigen Wand 6 ausgebildete Aussparungen 24 mit rechteckigem Querschnitt eingebracht sind, welche mit den dazwischenliegenden Positioniereinbuchtungen 8 eine Zinnenstruktur 40 ergeben. Es ist ferner zu erkennen, dass die Gehäuseschale einen weitestgehend symmetrischen Aufbau aufweist, da die auf den stirnseitigen Wänden 6 angeordneten Elemente wie die Rastelemente 25, der Rücksprung 22 mit stufenförmiger Kante 23 und die Zinnenstruktur 40 auf der Außenseite 19 der jeweils gegenüberliegenden stirnseitigen Wand 6 um 180 Grad verdreht dazu ausgebildet sind, so dass ein Rücksprung 22 zur Gehäuseunterseite 21 offen ist und der andere zur Gehäuseoberseite 20. Die Gehäuseschale 4 weist jeweils auf ihren durch die vier Wände 5, 6 gebildeten umlaufenden Kanten auf der Gehäuseoberseite 20 sowie auf der Gehäuseunterseite 21 definierte Schnittstellen auf, um die Deckelplatten 11, 12, 13 anzubinden. Die umlaufenden Kanten an Gehäuseober- und -unterseite weisen ferner Dichtflächen auf, um das Batteriezellenmakromodul 26 gegenüber äußeren Einflüssen abzuschirmen.

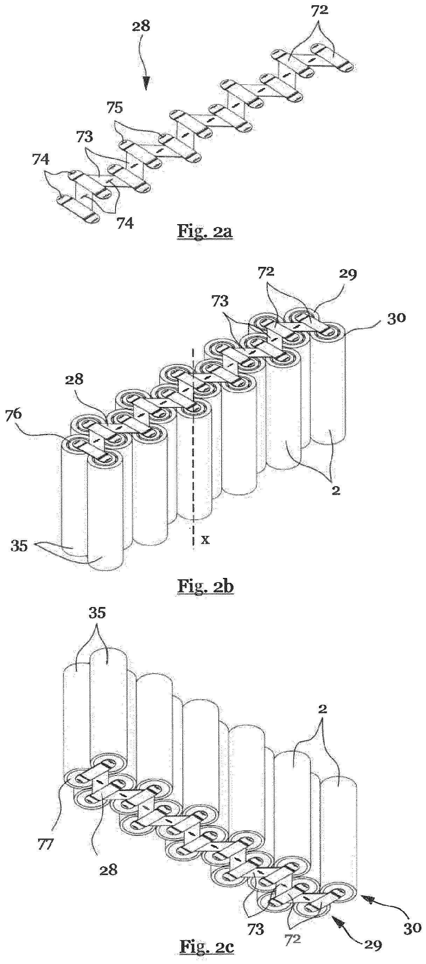

In Figur 2 ist ein im Makromodulgehäuse 1 aufnehmbares Batteriezellenmikromodul 27 dargestellt. Figur 2a zeigt einen Zellverbinder 28 zum Verbinden der Batteriezellen 2 untereinander, welcher aus einer Mehrzahl an Kontaktblechen 72 gebildet ist, welche mittels Kontaktblechverbindern 73 untereinander verbunden sind. Die Außenseiten der Kontaktbleche weisen jeweils schlitzförmige Durchbrüche 74 auf, welche zudem in der Mitte des Durchbruchs 74 jeweils eine kreisförmige Aufweitung 75 aufweisen, welche ein Einstecken von komplementären Gegenelementen erleichtert. Die Kontaktbleche 72 und die Kontaktblechverbinder 73 sind so angeordnet, dass die Kontaktbleche 72 parallel zueinander ausgerichtet sind und durch die zickzackförmig verlaufenden Kontaktblechverbinder 73 jeweils abwechselnd einen Versatz nach rechts oder links aufweisen, wobei der Versatz gleichbleibend alterniert. Dadurch sind jeweils alle übernächsten Kontaktbleche 72 in einem geradlinigen Verlauf zueinander ausgerichtet, so dass sich zwei parallele Reihen an Kontaktblechen 72 ergeben. Der Zellverbinder 28 hat zwei Aufgaben. Eine besteht darin, die Batteriezellen 2 relativ zueinander zu fixieren. Die andere Aufgabe besteht darin, die Batteriezellen 2 darüber hinaus auf einem vorbestimmten Abstand d zueinander zu fixieren, so dass kein Berührkontakt zwischen den Außenflächen der Batteriezellen 2 besteht.

Die Figuren 2b und 2c zeigen jeweils ein Mikromodul 27 von oben (2b) und von unten (2c), wobei in Figur 2b die Pluspolseite sichtbar und in Figur 2c die Minuspolseite sichtbar ist. Beide Seiten sind jeweils durch einen Zellverbinder 28 gemäß Figur 2a verbunden. Das Mikromodul besteht aus einer Mehrzahl an zylindrischen Batteriezellen 2 mit parallel ausgerichteten Längsachsen X, welche jeweils paarweise in Form von Batteriezellenpaaren 35 über jeweils ein Kontaktblech 72 miteinander verbunden sind, wobei die Kontaktbleche an die jeweiligen Seiten (Pluspol 76, Minuspol 77) angeschweißt sind. Durch den zickzackförmigen Versatz des Zellverbinders 28 weisen die Batteriezellenpaare 35 des Mikromoduls 27 ebenfalls einen entsprechenden Versatz zueinander auf, so dass die Batteriezellen 2 bei möglichst dichter Packung alle dieselbe Distanz zueinander aufweisen. So ergeben sich in der Hauptausbreitungsrichtung des Mikromoduls zwei parallele Reihen 29, 30 von Batteriezellen, die sich nebeneinander zickzackförmig erstrecken. Der Zellverbinder 28 ist dabei so dimensioniert, dass zwischen allen Zellaußenseiten ein Freiraum verbleibt, so dass zwischen allen benachbarten Batteriezellen 2 kein Berührkontakt besteht.

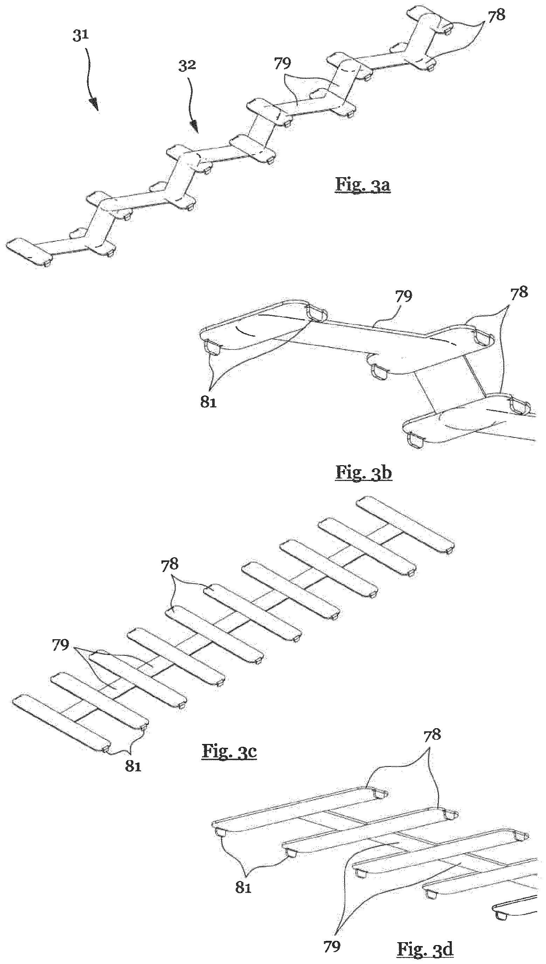

Die Mikromodule 27 können in der Gehäuseschale 4 untereinander fixiert, beziehungsweise mit definiertem Abstand zueinander über die Mikromodulverbinder 32 positioniert werden. Figur 3 zeigt zwei unterschiedliche Ausführungsformen des Mikromodulverbinders 32, eine zickzackförmige Version, dargestellt in den Figuren 3a und 3b, sowie eine geradlinige Version, dargestellt in den Figuren 3c und 3d. Der Mikromodulverbinder 32 weist dabei einen Mittesteg 79 auf, von dem sich eine Mehrzahl an Verbindungsabschnitten 78 in regelmäßigen Abständen wegerstreckt, wobei die Abstände dem Abstand zweier Batteriezellenpaare 35 innerhalb eines Mikromoduls 28 entsprechen. An den gegenüberliegenden Enden der Verbindungsabschnitte 78 sind jeweils abgekantete Laschen 81 angeordnet, welche zum Einstecken in die schlitzförmigen Durchbrüche 74 in den Kontaktblechen 72 oder den Kontaktblechverbindern 73 ausgebildet sind. Die Verbindungsabschnitte 78 weisen alle jeweils dieselbe Länge auf, wobei die Verbindungsabschnitte 78 der geradlinigen Ausführungsform des Mikromodulverbinders 32 länger sind als die des zickzackförmigen Mikromodulverbinders. Dies liegt daran, dass die Verbindungsabschnitte 78 der geradlinigen Ausführungsform des Mikromodulverbinders 32 zum Einstecken in die in den Kontaktblechverbindern 73 angeordneten schlitzförmigen Durchbrüche 74 vorgesehen sind, während demgegenüber die Verbindungsabschnitte 78 der zickzackförmigen Ausführungsform des Mikromodulverbinders 32 zum Einstecken in die Durchbrüche 74 in den Kontaktblechen 72 vorgesehen sind. Da die Abstände zwischen benachbarten Batteriezellen 2 und darauf befestigten Kontaktblechendabschnitten zweier benachbarter Mikromodule 27 geringer ist als der Abstand zweier Kontaktblechverbinder 73 zweier benachbarter Mikromodule 27, müssen die Verbindungsabschnitte 78 der geradlinigen Ausführungsform des Mikromodulverbinders 32 dementsprechend länger sein als die Verbindungsabschnitte 78 der zickzackförmigen Ausführungsform des Mikromodulverbinders 32. Zwischen den Batteriezellen 2 zweier benachbarter Mikromodule 28 ist derselbe Abstand d vorgesehen wie zwischen zwei Batteriezellen 2 desselben Mikromoduls 28. Der jeweils mittig fluchtend mit den Längsachsen X der zu verbindenden Batteriezellen 2 zu befestigende Verbindungsabschnitt 78 der zickzackförmigen Ausführungsform des Mikromodulverbinders 32 weist daher eine Länge auf, die dem Zelldurchmesser der Batteriezellen 2 plus dem vorzusehenden Abstand d zwischen den Batteriezellen 2 auf. Der jeweils an den Kontaktblechverbindern 73 zu befestigende Verbindungsabschnitt 78 der geradlinigen Ausführungsform des Mikromodulverbinders 32 weist demgegenüber eine Länge von zwei Zelldurchmessern plus zweimal dem vorzusehenden Abstand d zwischen den Batteriezellen 2 auf. Dementsprechend ergibt sich ein Verhältnis der Länge der Verbindungsabschnitte 78 beider Ausführungsformen des Mikromodulverbinders 32 von 1 zu 2.

Über die Aufweitung 75 in Form einer aufgeweiteten Nut in den Kontaktblechen 72 und den Kontaktblechverbindern 73 ist ein Finden und Positionieren der Laschen 81 der Mikromodulverbinder 32 über die entsprechend geformte Lasche 81 möglich.

Die Nutform setzt sich aus einer geraden Nut beziehungsweise dem schlitzförmigen Durchbruch 74 mit einem kreisförmigen Ausschnitt beziehungsweise der Aufweitung 75 zusammen

Der schlitzförmige Durchbruch 74 sowie die Aufweitung 75 sind dabei verrundet, somit wird ein einfaches Finden und Ineinandergleiten von Zellverbinder 28 und Mikromodulverbinder 32 gewährleistet. Beide Ausführungsformen des Mikromodulverbinders 32 können wahlweise entweder elektrisch leitfähig oder elektrisch isolierend ausgeführt sein.

Alternative Beabstandung beziehungsweise eine Positionierung der Mikromodule 28 durch einen Füllkleber zwischen den Mikromodulen 28 ist ebenfalls möglich. Dabei werden mittels leitender Mikromodulverbinder 32 nur jene Mikromodulpole 28 miteinander verbunden, welche zur Kontaktierung der Reihenschaltung der Mikromodule 28 benötigt werden, während die übrigen Mikromodulpole unverbunden bleiben. Die weitere Positionierung und Fixierung der Mikromodule 28 relativ zueinander erfolgt dann über einen Füllkleber, welcher zwischen die einzelnen Batteriezellen 2 im Makromodulgehäuse 1 eingebracht wird und dort aushärtet. Vorzugsweise weist dieser Füllkleber eine hohe Wärmeleitfähigkeit auf, um Wärme effektiv aus dem Gehäuseinnenraum 3 abtransportieren zu können.

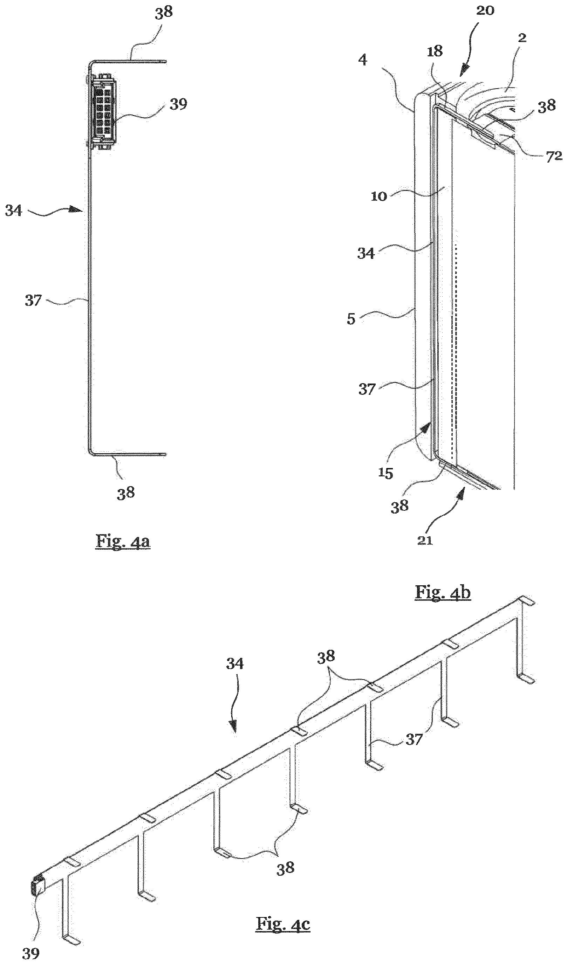

In den Figuren 4a-c ist die BMS-Platine 34 dargestellt, welche zum Einsetzen in die Längsnut 14 in der Gehäuseschale 4 ausgebildet ist. Dazu weist die Platine 34 einen länglichen Platinenkörper auf, der an die Form der Längsnut 14 angepasst ist, sowie mehrere sich davon wegerstreckende Arme 37, beispielsweise sieben wie dargestellt. An der Oberseite der Platine 34, welche in Richtung der Gehäuseoberseite 20 weist, sowie jeweils an den Enden der Arme 37 weist die Platine Zwischenabgriffe 38 auf, die im rechten Winkel in Richtung Gehäuseinnenraum 3 abgekantet sind. Die Zwischenabgriffe 38 an Oberseite und Unterseite der Platine 34 fluchten jeweils miteinander. Somit weist die dargestellte Platine 34 vierzehn Zwischenabgriffe 38 auf. Die Zwischenabgriffe 38 sind in regelmäßigen Abständen angeordnet, so dass ein Abgriff an jeder vierten Trennwand 10 der Gehäuseschale 4 erfolgen kann. Endseitig schließt der Platinenkörper mit dem letzten Zwischenabgriff bündig ab, Frontseitig weist der Platinenkörper ein Überhangsstück auf, an welchem eine Platinenanschlussbuchse 39 zum Gehäuseinnenraum 3 weisend an der Platine 34 befestigt ist. Figur 4b zeigt eine Querschnittsansicht durch eine längsseitige Wand 5 einer in eine Gehäuseschale 4 eingesetzten Platine 34 und insbesondere durch eine Durchgangsöffnung 15, durch welche ein Arm 37 verläuft. Es lässt sich erkennen, dass die Zwischenabgriffe 38 jeweils auf Höhe der Oberseite und der Unterseite der angrenzenden Batteriezelle 2 abgekantet sind und jeweils mit einem Kontaktblech 72, das zwei Batteriezellen 2 eines Batteriezellenpaars 35 verbindet, in Verbindung stehen. Ferner ist zu erkennen, dass die Zwischenabgriffe 38 durch Nuten 18 geführt sind, welche senkrecht zur längsseitigen Wand 5 in die entsprechenden Trennelemente 10 eingebracht sind. Zwischen den Zwischenabgriffen 38 und der Platine 34 beziehungsweise den Armen 37 können definierte Knickstellen zur genauen Lageausrichtung der Zwischenspannungsabgriffe 38 angeordnet sein.

Die Platine 34 kann als integraler Bestandteil des Batteriemoduls 26 ausgeführt sein.

Die Platine 34 kann als Leitungsstrang zur Kontaktierung der Mikromodule 28 über Zwischenabgriffe 38 ausgeführt sein, wobei die Übergabe der Messspannungen an übergeordnete Slaves über die Platinenanschlussbuchse 39 und ein daran angeschlossenes Adapterkabel erfolgt, das durch den Durchbruch 67 im Gehäusedeckel 61 geführt wird.

Die Zwischenabgriffe 38 können insbesondere zum Erfassen von Zellspannungen und Temperaturen ausgebildet sein.

Die Platine 34 kann alternativ als BMS Slave ausgeführt sein, wobei in diesem Fall die Integration der Slavekomponenten wie Mikrokontroller, Widerstände, Multiplexer etc. auf dem Platinenkörper erfolgt.

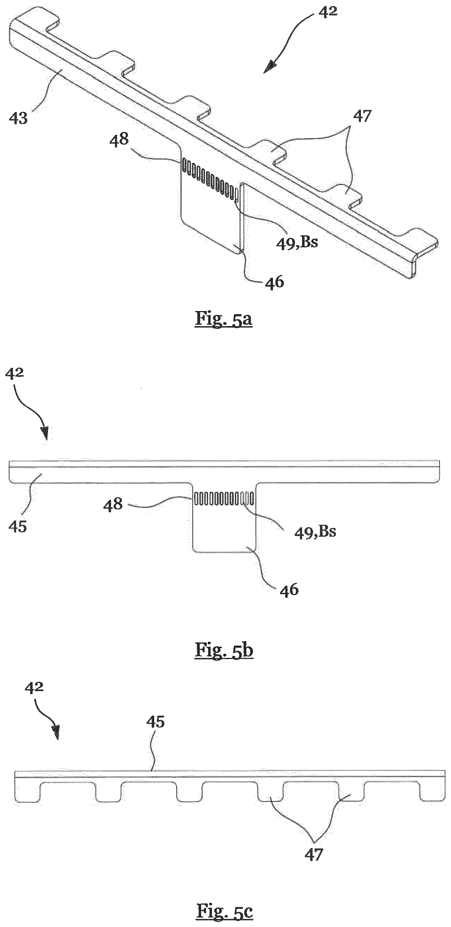

Figur 5a-c zeigt drei Ansichten eines Leistungsverbinders 42, welcher Teil der Kontaktiervorrichtung 41 ist und eine elektrische Verbindung zwischen Gehäuseinnenraum 3 und Gehäuseaußenseite herstellt, genauer gesagt zwischen dem an die zugeordnete stirnseitige Wand 6 anliegenden Mikromodul 27 und der Steckhülse 43. Der Leistungsverbinder 42 weist eine an den Rücksprung 23 in der Gehäuseschale 4 angepasste T-förmige Ausgestaltung auf, wobei der Rücksprung 23 eine Anlagefläche für den Leistungsverbinder 42 aufweist. Dazu besteht der Leistungsverbinder 42 aus einer Kontaktschiene 43, an welche sich auf der einen Seite in gleicher Ebene eine Kontaktlasche 46 anschließt und auf der anderen Seite und davon in Richtung Gehäuseinnenraum 3 abgekantet mehrere Kontaktfinger 47. Am oberen Ende der Kontaktlasche 46 ist eine Schmelzsicherung 48 integriert, welche durch mehrere parallele Stege 49 mit einer jeweiligen Stegbreite B_{S} gebildet ist, wobei zwischen allen Stegen 49 ein vordefinierter Abstand vorgesehen ist. Über diese Parameter kann das Durchbrennverhalten beziehungsweise der Überlaststrom eingestellt werden, ab welchem die Schmelzsicherung schmilzt und den elektrischen Kontakt unterbricht. Die Schmelzsicherung 48 kann aus demselben Material hergestellt sein wie der restliche Leistungsverbinder 42. Über die symmetrische Ausbildung der Gehäuseschale 4 kann eine symmetrische Stromabnahme auf beiden Seiten des Moduls 26 über jeweils eine Kontaktiervorrichtung 41 erfolgen.

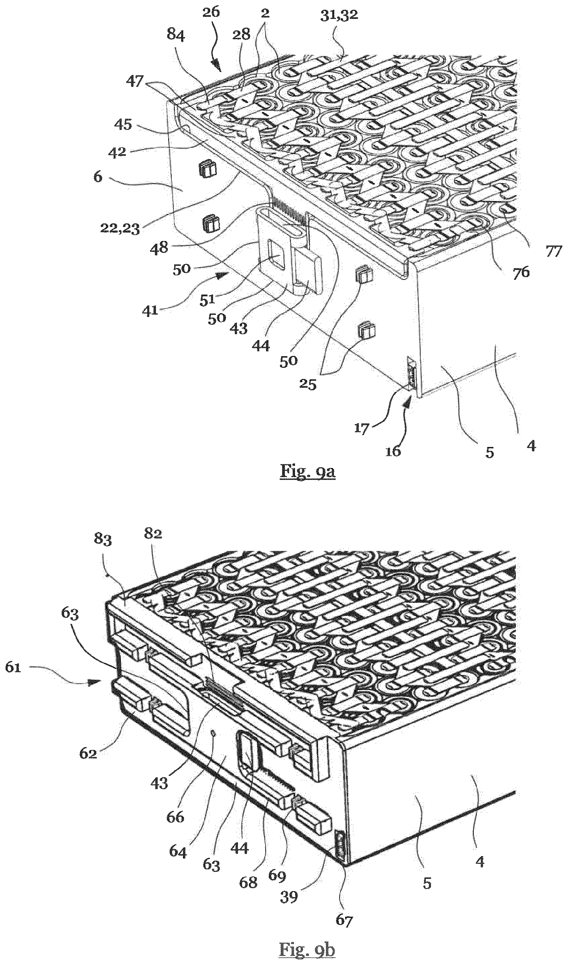

Die Kontaktfinger 47 greifen im montierten Zustand durch die Aussparungen 24 in Gehäuseschale 4 und Kontaktieren über einen Mikromodulverbinder 32 die außen liegende Batteriezellreihe, wie in Figur 9a dargestellt. Ferner wird die Kontaktlasche 46 an die Rückseite von der Steckhülse 43 geschweißt, wobei der Leistungsverbinder 42, die Steckhülse 43 sowie der Gehäusedeckel 61 als vormontiertes Teil bereitgestellt werden können.

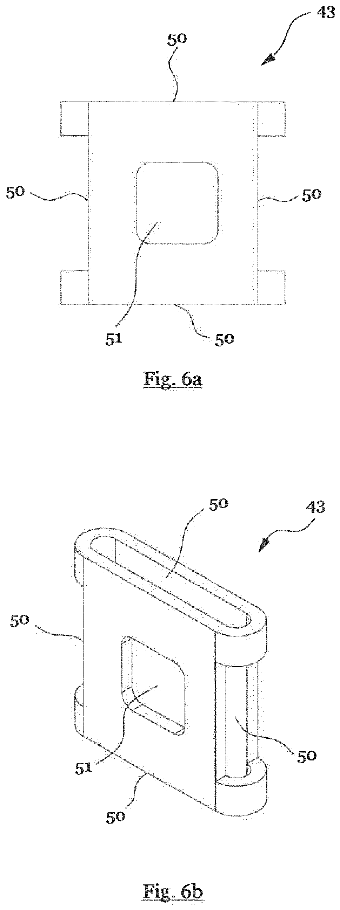

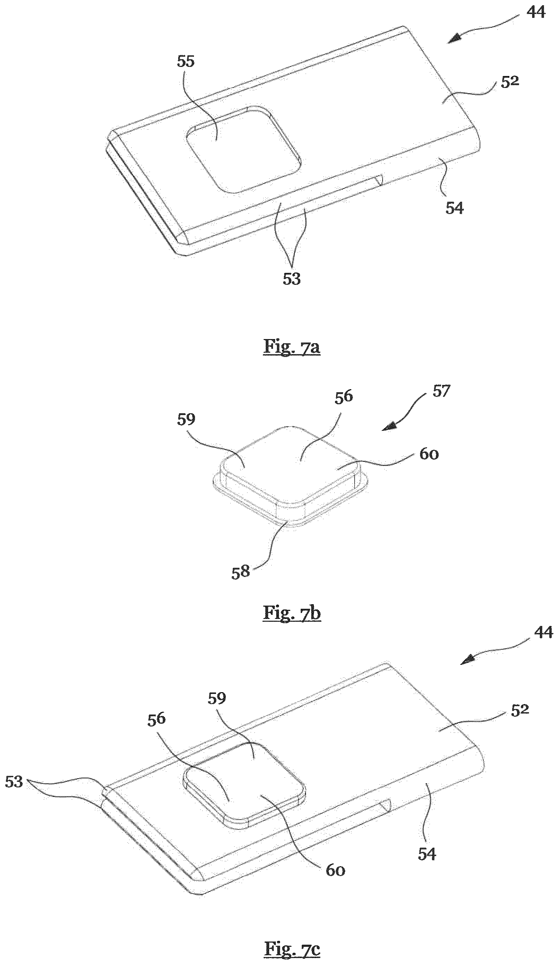

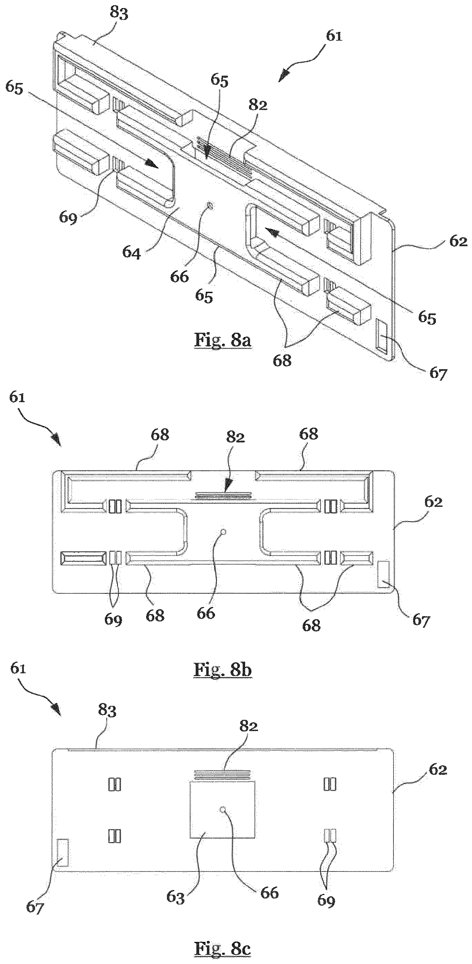

Die in Figur 6 dargestellte flache rohrförmige Steckhülse 43 weist zwei parallele Wände auf und bietet vier mögliche seitliche Einschubrichtungen für den Leistungsstecker 44. Hierzu sind seitlich Teilstücke der die das Rohr abschließenden Rohrabschnitte jeweils einer Einschuböffnungsabmessung entsprechend herausgebrochen. Im dargestellten Beispiel liegen die Einschubrichtungen parallel zur Ebene der stirnseitigen Wand 6, an welcher die Kontaktiervorrichtung 41 befestigt ist. Die vier Einschubrichtungen stehen senkrecht zueinander. Dabei ist die Dachstruktur 64 auf dem Gehäusedeckel 61 entsprechend ausgebildet, wie in Figur 8 zu erkennen ist. Die vier Einschuböffnungen 50 weisen alle denselben Querschnitt auf. Die Steckhülse 43 umfasst außerdem einen Hülsendurchbruch 51, in welchen der in Figur 7 dargestellte Clip 57 einrasten kann. Dementsprechend weisen Hülsendurchbruch 51 und Clip 57 korrespondierende Abmessungen auf.

Figur 7a-c zeigt die Elemente eines Leistungssteckers 44, welcher in eine der Einschuböffnungen 50 der Steckhülse 43 einsteckbar ist. Der Leistungsstecker 44 umfasst ein Steckerelement 52, das einen Halteabschnitt 54 aufweist, von welchem sich zwei Steckplatten 53 parallel voneinander beabstandet wegerstrecken. Die Steckplatten 53 sind federnd ausgeführt, so dass diese auseinandergebogen oder zusammengedrückt werden können und beim Loslassen in ihre ursprüngliche Form zurückkehren. In einer der Steckplatten 53 ist ein Clipdurchbruch 55 eingebracht, welcher eine Durchgangsöffnung ist. Die Abmessungen des Clipdurchbruchs 55 korrespondieren mit denen eines Clips 57, welcher ein weiteres Element des Leistungssteckers 44 ist. Wie dargestellt können Clipdurchbruch 55 und Clip 57 einen quadratischen Querschnitt mit abgerundeten Ecken aufweisen, alternativ können beide Elemente einen runden Querschnitt aufweisen. Die Dicke des Clips 57 ist größer als der Abstand der beabstandeten Steckplatten 53, damit dieser nicht aus dem Leistungsstecker 44 herausfallen kann. Der Clip weist einen oberen Clipabschnitt 56, welcher geringere Abmessungen als der Clipdurchbruch 55 aufweist und im eingesteckten Zustand durch diesen hindurchragt. In einem unteren Bereich weist der Clip 57 eine umlaufende Kante 58 auf, welche so bemessen ist, dass diese den Clipdurchbruch 55 hintergreift und somit ein Herausrutschen des Clips 57 aus dem Clipdurchbruch 55 verhindert. Die Clipoberseite 59 weist eine farbliche Markierung auf, mittels welcher ein Überprüfen eines korrekten Einsteckens des Leistungssteckers 44 in die Steckhülse 43 erleichtert wird. Hierzu weist die Dachstruktur 64 eine Durchgangsbohrung 66 auf, durch welche die Clipoberseite 59 im korrekt eingesteckten Zustand sichtbar ist. Figur 7c zeigt einen Leistungsstecker 44 mit eingestecktem Clip 57. Das Einclipsen des Leistungssteckers 44 in die Steckhülse 43 erfolgt durch Einschieben des Leistungssteckers 44 in eine der Einschuböffnungen 50 der Steckhülse 43, so dass der Clip in den mittig angeordneten symmetrischen Hülsendurchbruch 51 durch Federkraft einhakt, wie in Figur 9a sichtbar ist.

In Figur 8 ist der Gehäusedeckel 61 dargestellt, welcher zum Verschließen des Gehäuses 1 an den stirnseitigen Wänden 6 ausgebildet ist. Dabei kann für beide stirnseitigen Wände 6 dieselbe Deckelvariante verwendet werden, da die positive und die negative Seite des Gehäuses 4 symmetrisch aufgebaut sind. Der Gehäusedeckel 61 weist eine Deckelplatte 62 auf, welche bei auf die Gehäuseschale 4 aufgesetztem Deckel 61 an der jeweiligen stirnseitigen Wand 6 anliegt. In der Rückansicht in Figur 8c ist erkennbar, dass die Deckelplatte 62 mittig angeordnet eine Durchgangsöffnung 63 aufweist, welche mit den Abmessungen der Steckhülse 43 so abgestimmt ist, dass die Steckhülse durch die Durchgangsöffnung 63 durchsteckbar ist. Eine Dachstruktur 64 erstreckt sich auf der Vorderseite des Gehäusedeckels 61 wie in Figur 8a dargestellt über die Durchgangsöffnung 63, so dass frontseitig ein Berührschutz gegenüber der Kontaktiervorrichtung 41 besteht. Die Dachstruktur 64 verläuft parallel zur Deckelplatte 62 mit einem Abstand zu dieser, der zumindest der Höhe der Steckhülse 43 entspricht, so dass diese vollständig unter der Dachstruktur 64 aufnehmbar ist. Die Dachstruktur 64 weist korrespondierend mit der Steckhülse 43 angeordnete Dachöffnungen 65 auf, durch welche der Leistungsstecker 44 aus unterschiedlichen Richtungen in die Einschuböffnungen 50 Steckhülse eingeschoben werden kann. Die Dachstruktur wird wie in Figur 8a und 8b dargestellt von H-förmig angeordneten Versteifungsrippen 68 getragen, welche auf der Deckelplatte 62 angeordnet sind. Die dargestellte Deckelplatte 62 weist zusätzlich noch weitere Versteifungsrippen 68 auf, welche jedoch alle so angeordnet sind, dass diese ein Einschieben des Leistungssteckers 44 in eine der Einschuböffnungen 50, 65 nicht behindern. Ferner befinden sich die Versteifungsrippen 68 nicht im Bereich senkrecht und waagerecht zum Durchbruch 67, welcher mit der Ausnehmung 16 in der Gehäuseschale 4 fluchtet, damit in diesen Bereichen Platz zum Entlangführen von Anschlusskabeln verbleibt, welche in die in der Ausnehmung 16 angeordnete und zum Durchbruch 67 weisende Platinenanschlussbuchse 39 einsteckbar sind. Die Dachstruktur 64 kann eine Durchgangsbohrung 66 aufweisen, welche mit dem darunter befindlichen Clip 57 fluchtet, so dass bei korrekt eingestecktem Leistungsstecker 44 der Clip 57 durch die Durchgangsbohrung 66 sichtbar ist. Die Durchgangsbohrung 66 dient ferner dem Zweck, einen eingeclipsten Leistungsstecker 44 wieder lösen zu können, indem mit einem spitzen Gegenstand der Clip 57 in die Steckhülse 43 gedrückt wird, so dass der Leistungsstecker 44 entfernt werden kann. Oberhalb der Dachstruktur 64 weist die Deckelplatte 62 ein Sichtfenster 82 auf, welches durch waagerecht angeordnete Schlitze gebildet ist und welches mit der darunter angeordneten und von der Deckelplatte 62 abgedeckten Schmelzsicherung 48 fluchtet, so dass von der Gehäuseaußenseite überprüft werden kann, ob die Schmelzsicherung 48 noch intakt ist. Die Schlitze sind jeweils so schmal ausgeführt, dass nicht mit einem Finger durch diese hindurchgegriffen werden kann. Ferner sind die Schlitze senkrecht zu den Stegen 49 der Schmelzsicherung 48 angeordnet, damit die Schmelzsicherung 48 besonders einfach überprüft werden kann. Der Gehäusedeckel 61 kann am oberen Ende der Deckelplatte 62 ferner eine Abkantung 83 aufweisen, welche sich bei aufgesetztem Deckel 62 auf die jeweilige stirnseitige Wand 6 über die Kontaktfinger 47 erstreckt und dadurch einen Berührschutz darstellt. Zum Fixieren des Gehäusedeckels 61 an den stirnseitigen Wänden 6 weist die Deckelplatte 62 korrespondierend mit den Rastelementen 25 entsprechende Rastdurchbrüche 69 auf, welche von den Rastabschnitten 71 der Rastelemente 25 hintergriffen werden können, um den Gehäusedeckel 61 zu fixieren. Die Breite der Rastdurchbrüche 69 ist dabei größer als die der Rastabschnitte 71, damit diese durch die Rastdurchbrüche 69 hindurchgesteckt werden können.

Figur 9a zeigt einen Ausschnitt eines Batteriezellenmakromoduls 26, wobei in der Gehäuseschale 4 mehrere Mikromodule 27 aufgenommen sind, welche abwechselnd mit ihren Pluspolen 76 und ihren Minuspolen 77 zur Gehäuseoberseite 20 hinweisen. Die Batteriezellen 2 der Mikromodule 27 sind mittels Zellverbindern 28 aneinander gekoppelt und dadurch relativ zueinander auf den vorbestimmten Abstand d fixiert und positioniert. Untereinander sind die Mikromodule 27 zur Realisierung der Reihenschaltung über Mikromodulverbinder 27 aneinander gekoppelt und elektrisch verbunden. Das dargestellte Mikromodul 27, das an der stirnseitigen Wand 6 anliegt, ist dabei über einen Kontaktverbinder 84 an die Kontaktfinger 47 des Leistungsverbinders 42 gekoppelt, wobei pro Batteriezellenpaar 35 ein Kontaktfinger 47 vorgesehen ist. Der Kontaktverbinder 84 weist einen zickzackförmigen Verlauf auf und wird an der einen Seite über Kontaktabschnitte an die in zickzackförmiger Anordnung zueinander ausgerichteten äußeren Batteriezellen 2 des äußersten Mikromoduls 27 angebunden. Wandseitig weisen die Kontaktabschnitte einen geradlinigen Verlauf auf, um die Kontaktabschnitte des Kontaktverbinders 84 an die geradlinig ausgerichteten Kontaktfinger 47 anzubinden. Es ist erkennbar, dass der Leistungsverbinder 42 im Rücksprung 22 aufgenommen ist und an parallel zur stirnseitigen Gehäusewand 6 an diesem anliegt. Die Steckhülse 43 ist an die Kontaktlasche 46 des Leistungsverbinders 42 angeschweißt. Beispielhaft ist der Leistungsstecker 44 von rechts in die rechte Einschuböffnung 50 der Steckhülse eingeschoben und mit dem Clip 57 im Hülsendurchbruch 51 eingerastet. Zu Anschauungszwecken ist in Figur 9a das Modul 26 ohne aufgesetzten Gehäusedeckel 61 dargestellt, damit die Kontaktiervorrichtung 41 sichtbar wird, in Betrieb genommen wird das Modul 1 jedoch nur, solange die Gehäusedeckel 61 sowie die Deckel 11 auf Oberseite 20 und Unterseite 21 des Gehäuses 1 fixiert sind. Es ist ferner erkennbar, dass eine Platine 34 in die Längsnut 14 eingesetzt ist und die daran befestigte Platinenanschlussbuchse 39 in der Ausnehmung 16 aufgenommen ist, so dass ein Stecker durch den Durchbruch 67 in diese einsteckbar ist. Figur 9b zeigt das Batteriezellenmakromodul 26 mit aufgesetztem Deckel 61 und eingestecktem Leistungsstecker 44, welcher in eine der Einschuböffnungen 50 der Steckhülse und durch die entsprechende Dachöffnung 65 in der Dachstruktur des Gehäusedeckels 61 eingesteckt ist.

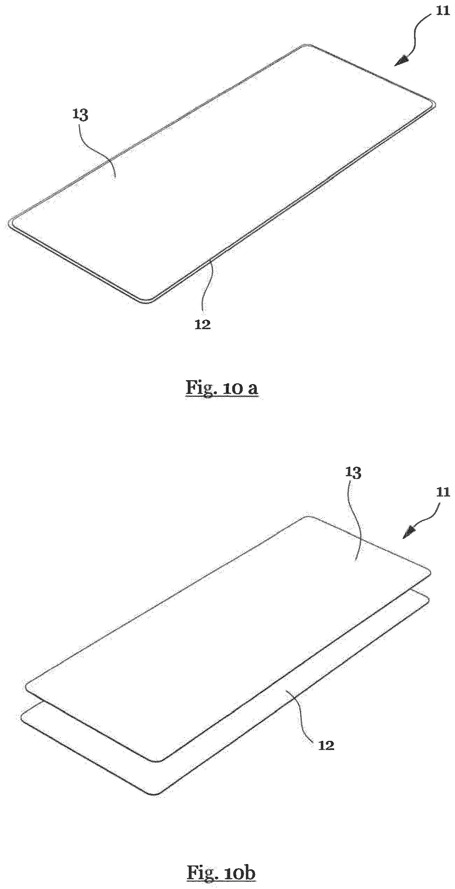

Die Gehäuseober- und -unterseite wird jeweils durch zwei übereinanderliegenden Platten 12, 13 realisiert, wie in Figur 10 dargestellt, wobei die Außenplatte 13 auf den Modulaußenseiten aus einem metallischen Werkstoff oder Kunststoff gefertigt wird. Die äußere Platte 13 dient der mechanischen Stabilisierung des Moduls 26 und der Mikromodule 27 als auch dem effektiven Wärmeabtransport. Die Platte 12 zur Modulinnenseite ist als sogenannter Gapfiller ausgeführt, welcher nichtleitend ist. Dadurch wird sichergestellt, dass der Berührschutz der aktiven Teile gegeben ist sowie der Wärmetransfer von den Zell- und Mikromodulverbindern erleichtert wird. Ferner erfahren die Mikromodule 27 eine Klemmung und weitere Positionierung in Richtung der Längsachsen X der Batteriezellen 2. Außerdem wird der Vibrationseintrag auf die Mikromodule 27 gedämpft. Die Platten 11 können mittels Schraubverbindungen oder Klebverbindungen an der Gehäuseschale befestigt werden.

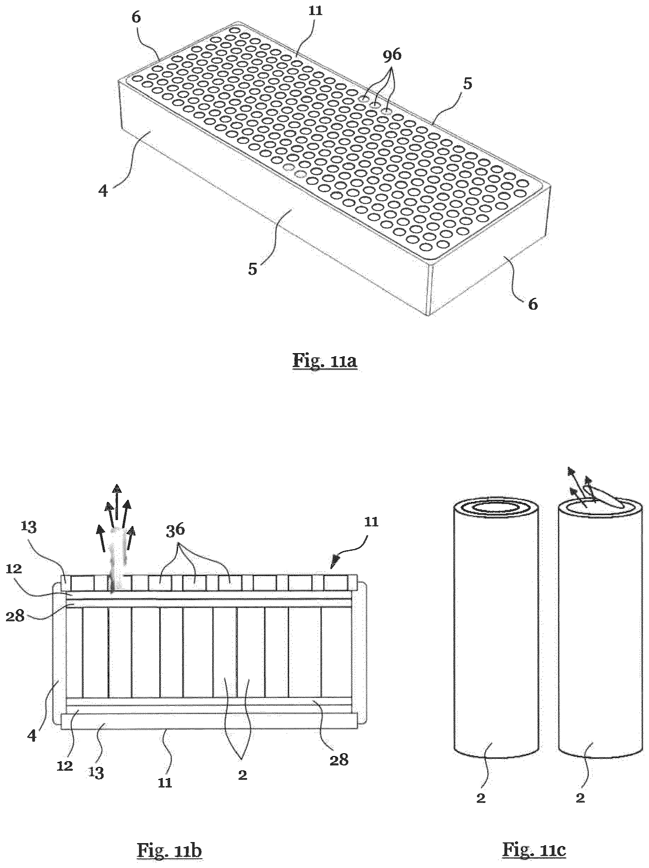

Wie in Figur 11a dargestellt, können die Platten perforierte Sollbruchflächen 36, sog. "Schlote" aufweisen, die im Falle eines Zellevents (Ausgasen) Sollbruchstellen darstellen, um die Gase schnell ableiten zu können. Diese sind vorzugsweise jeweils mittig über jeder Batteriezelle 2 angeordnet. Die Modulober- und -unterseiten 20, 21 können flächig an Kühlplatten angebunden werden, für einen guten Wärmeabtransport sind die Innenplatten 12 elektrisch isolierend und wärmeleitend, die Außenplatten 13 wärmeleitend ausgeführt. Figur 11b zeigt einen Querschnitt durch ein Batteriezellenmakromodul 26 während eines Ausgasprozesses. Durch Fehlfunktion hervorgerufenes Ausgasen einer oder mehrerer Zellen 2 verbiegen die heißen Gase den Zellverbinder 28, welcher so ausgelegt ist, dass ein Verbiegen möglich ist, aber trotzdem die mechanische Integrität gewährleistet ist. Die heißen Gase durchschlagen anschließend die Innenplatte 23 und Strömen durch die Öffnung des Gehäusedeckels 11 aus dem Modul 27. Der Vorteil dabei ist, dass im normalen Betrieb die Wärme aus den Zellen über die Innenplatte 12 abgeführt werden und an das Gehäuse abgegeben werden kann. Im Fehlerfall durchstoßen die heißen Gase die Innenplatte 12 über der ausgasenden Zelle, so dass die heißen Gase aus dem Modul abgeleitet werden können Dabei kann über jeder Zelle die Abdeckplatte 13 gelocht sein, wie in Figur 11a dargestellt. Dabei ist wichtig, dass der Durchmesser der Ausgasschlote kleiner ist, als der Außendurchmesser der Zellen 2, aber größer als die Ausgaskappe der Zelle 2, damit ein Aufklappen der Zelle und das Ausströmen der heißen Gase begünstigt wird.

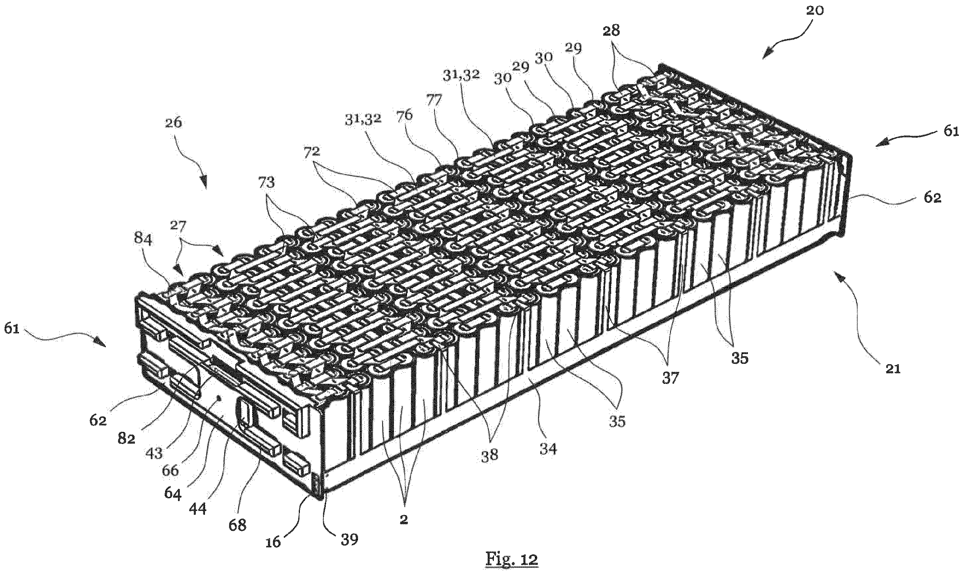

Figur 12 zeigt eine Gesamtansicht des Batteriezellenmakromoduls 26, wobei die Gehäuseschale 4 sowie die Deckel 11 zu Anschauungszwecken nicht dargestellt sind. Insbesondere ist die Mehrzahl an in Reihe geschalteten Mikromodule 27 zu erkennen sowie die im unteren Bereich der sichtbaren längsseitigen Modulseite die Platine 34 mit davon abgehenden Armen 37 und den abgekanteten Zwischenabgriffen 38, welche jeweils in Kontakt mit Kontaktblechen 72 zwischen Batteriezellenpaaren 35 stehen, wobei der Abgriff an jedem zweiten Batteriezellenpaar 35 entlang der Längsseite erfolgt.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: Batteriezellenmakromodulgehäuse
- 2: Batteriezelle
- 3: Innenraum
- 4: Gehäuseschale
- 5: Längsseitige Wand
- 6: Stirnseitige Wand
- 7: Innenseiten der Wände
- 8: Positioniereinbuchtung
- 9: Durchtrittsebene
- 10: Trennelement
- 11: Deckel
- 12: Innenplatte
- 13: Außenplatte
- 14: Längsnut
- 15: Durchgangsöffnung
- 16: Ausnehmung
- 17: Platinenanschlussstecker
- 18: Nut
- 19: Außenseiten der Wände
- 20: Gehäuseoberseite
- 21: Gehäuseunterseite
- 22: Rücksprung
- 23: Stufe
- 24: Aussparung
- 25: Rastelement
- 26: Batteriezellenmakromodul
- 27: Batteriezellenmikromodul
- 28: Verbindungsblech
- 29: Erste Batteriezellenreihe
- 30: Zweite Batteriezellenreihe
- 31: Fixierungsmittel
- 32: Mikromodulverbinder (32a, 32b)
- 33: Füllkleber
- 34: Platine
- 35: Batteriezellenpaar
- 36: Perforierte Sollbruchfläche
- 37: Arm
- 38: Zwischenabgriff
- 39: Platinenanschlussbuchse
- 40: Zinnenstruktur
- 41: Kontaktiervorrichtung
- 42: Leistungsverbinder
- 43: Steckhülse
- 44: Leistungsstecker
- 45: Kontaktschiene
- 46: Kontaktlasche
- 47: Kontaktfinger
- 48: Schmelzsicherung
- 49: Steg
- 50: Öffnung
- 51: Hülsendurchbruch
- 52: Steckerelement
- 53: Steckplatte
- 54: Halteabschnitt
- 55: Clipdurchbruch
- 56: Clipabschnitt
- 57: Clip
- 58: Umlaufende Kante
- 59: Clipoberseite
- 60: Farbliche Markierung
- 61: Gehäusedeckel
- 62: Deckelplatte
- 63: Durchgangsöffnung
- 64: Dachstruktur
- 65: Dachöffnungen
- 66: Durchgangsbohrung
- 67: Durchbruch
- 68: Versteifungsrippe
- 69: Rastdurchbruch
- 70: Rasthaken
- 71: Rastabschnitt
- 72: Kontaktblech
- 73: Kontaktblechverbinder
- 74: Schlitzförmiger Durchbruch
- 75: Aufweitung
- 76: Pluspol
- 77: Minuspol
- 78: Verbindungsabschnitt
- 79: Mittel steg
- 80: Halbschale
- 81: Abgekantete Lasche
- 82: Sichtfenster
- 83: Abgekanteter Steg
- 84: Kontaktverbinder
- T₁: Erste Tiefe
- B₁: Erste Breite
- T₂: Zweite Tiefe
- B₂: Zweite Breite
- B_{S}: Breite Schmelzsicherungsstege
- r_{K}: Krümmungsradius
- d: Abstand
- X: Längsachse Batteriezelle

## Patentansprüche

1. Kontaktiervorrichtung (41) für ein Batteriezellenmakromodulgehäuse (1), welche zur Spannungsversorgung der in dem Gehäuse aufnehmbaren Batteriezellen (2) ausgebildet ist, mit einem Leistungsverbinder (42), welcher eine elektrische Leitung zwischen Gehäuseinnenraum (3) und Gehäuseaußenseite bereitstellt, und mit einer mit dem Leistungsverbinder (42) elektrisch und mechanisch verbundenen Steckhülse (43) sowie mit einem in die Steckhülse (43) lösbar einsteckbaren Leistungsstecker (44), wobei die Steckhülse (43) mehrere Stecköffnungen (50) aufweist, die ein jeweiliges Einstecken des Leistungssteckers (44) aus mehreren unterschiedlichen Richtungen parallel zur stirnseitigen Wandebene ermöglichen.

2. Kontaktiervorrichtung (41) nach Anspruch 1, wobei der Leistungsverbinder (42) eine parallel zu der stirnseitigen Wand (6) ausgerichtete Kontaktschiene (45) aufweist, die eine Breite aufweist, welche mit der Anzahl an Trennelementen (10) auf der Innenseite (7) der zugeordneten stirnseitigen Wand (6) korrespondiert, wobei sich eine Kontaktlasche (46) an die Kontaktschiene (45) anschließt und wobei sich von der Kontaktschiene (45) rechtwinklig abgekantete Kontaktfinger (47) in Richtung Gehäuseinnenraum (3) wegerstrecken.

3. Kontaktiervorrichtung (41) nach Anspruch 2, wobei der Leistungsverbinder (42) im Rücksprung (22) eingesetzt ist, wobei die Kontaktschiene (45) im Bereich der ersten Breite (B1) eingesetzt ist, wobei die Kontaktlasche (46) in den Abschnitt mit vergrößerter Tiefe (T₂) hineinragt, und wobei sich die Kontaktfinger (47) durch die Aussparungen (24) in den Gehäuseinnenraum (3) hineinerstrecken.

4. Kontaktiervorrichtung (41) nach Anspruch 2 oder 3, wobei der Leistungsverbinder (42) eine Schmelzsicherung (48) aufweist, welche zwischen der Kontaktlasche (46) und der Kontaktschiene (45) angeordnet ist und aus einer vordefinierten Anzahl an Stegen (49) mit einer jeweils vordefinierten Breite (B_{S}) gebildet ist.

5. Kontaktiervorrichtung (41) nach Anspruch 1, wobei die Steckhülse (43) vier Öffnungen (50) aufweist, welche jeweils rechtwinklig zueinander angeordnet sind.

6. Kontaktiervorrichtung (41) nach einem der Ansprüche 1 bis 5, wobei die Steckhülse (43) einen von der stirnseitigen Gehäusewand (6) beabstandeten Hülsendurchbruch (51) aufweist, in den der Leistungsstecker (44) federnd einrasten kann.

7. Kontaktiervorrichtung (41) nach einem der Ansprüche 1 bis 6, wobei der lösbare Leistungsstecker (44) ein Steckerelement (52) mit zwei parallel zueinander verlaufenden Steckplatten (53) umfasst, die relativ zueinander federnd beweglich sind und über einen Halteabschnitt (54) miteinander verbunden sind, wobei eine der Steckplatten (53) einen Clipdurchbruch (55) aufweist, durch welchen ein Clipabschnitt (56) eines zwischen den Steckplatten (53) aufgenommenen Clips (57) ragt, wobei der Clip (57) eine umlaufende Kante (58) aufweist, welche den Clipdurchbruch (55) hintergreift, so dass ein Herausrutschen des Clips (57) durch den Clipdurchbruch (55) verhindert ist.

8. Kontaktiervorrichtung (41) nach Anspruch 1, wobei die Abmessungen von Hülsendurchbruch (51) und Clipabschnitt (56) so aufeinander abgestimmt sind, dass bei in die Steckhülse (43) eingestecktem Leistungsstecker (44) der Clip (57) in den Hülsendurchbruch (51) einrastet.

9. Kontaktiervorrichtung (41) nach Anspruch 1 oder 8, wobei die durch den Hülsendurchbruch (51) ragende Oberseite (59) des Clips (57) eine farbliche Markierung (60) aufweist.

10. Kontaktiervorrichtung (41) nach einem der Ansprüche 2 bis 9, welche mit den Kontaktfingern (47) des Leistungsverbinders (42) mechanisch und elektrisch an im Gehäuse (1) aufgenommene Batteriezellen (2) koppelbar ist, wobei die Steckhülse (43) mechanisch und elektrisch an die Kontaktlasche (46) gekoppelt ist.

11. Gehäusedeckel (61) für eine Kontaktiervorrichtung (41) nach einem der Ansprüche 1 bis 10 zum stirnseitigen Befestigen am Gehäuse (1), welcher zum Bedecken einer oder mehrerer der stirnseitigen Wände (6) an der Gehäuseschale (4) befestigbar ist, wobei der Gehäusedeckel (61) eine mit der stirnseitigen Wand (6) des Gehäuses in Anlage bringbare Deckelplatte (62) mit einer Durchgangsöffnung (63) mit einem mit den Steckhülsenabmessungen korrespondierenden Außendurchmesser aufweist, so dass die Steckhülse bei angebrachtem Gehäusedeckel (61) durch die Durchgangsöffnung (63) hindurchragt.

12. Gehäusedeckel (61) nach Anspruch 11, der ferner eine von der Deckelplatte (62) beabstandete Dachstruktur (64) umfasst, welche die Steckhülse (43) außenseitig abdeckt und mit den Öffnungen (50) in der Steckhülse (43) korrespondierende Dachöffnungen (65) aufweist, durch welche der Leistungsstecker (44) in die Steckhülse (43) einsteckbar ist.

13. Gehäusedeckel (61) nach Anspruch 12, wobei die Dachstruktur (64) eine Durchgangsbohrung (66) aufweist, durch welche bei korrekt eingestecktem Leistungsstecker (44) die farbliche Markierung (60) des Clips (47) sichtbar ist.

14. Gehäusedeckel (61) nach einem der Ansprüche 11 bis 13, wobei in der Deckelplatte (62) ein Sichtfenster (82) angeordnet ist, welches mit der von der Deckelplatte (62) abgedeckten Schmelzsicherung (48) fluchtet, so dass der Zustand der Schmelzsicherung (48) von der Gehäuseaußenseite her überprüft werden kann.

15. Gehäusedeckel (61) nach einem der Ansprüche 11 bis 14, wobei die Deckelplatte einen Durchbruch (67) aufweist, der mit der in der stirnseitigen Wand (6) angeordneten Ausnehmung (16) zur Aufnahme einer Platinenanschlussbuchse (39) fluchtet.
